# EUROPÄISCHE PATENTSCHRIFT

(11) **EP 0 632 102 B1**
(45) Veröffentlichungstag und Bekanntmachung des Hinweises auf die Patenterteilung: **02.04.1997**
(21) Anmeldenummer: 94109171.2
(22) Anmeldetag: 15.06.1994
(51) Int. Cl.: C09B 23/00, C09B 23/04, C09B 23/10, C08K 5/34, C08K 5/15

(54) **Massefärben von Kunststoffen**
Mass dyeing of synthetic material
Coloration de matières synthétiques dans la masse

(30) Priorität: 28.06.1993 DE 4321420; 29.11.1993 DE 4340560
(43) Veröffentlichungstag der Anmeldung: 04.01.1995
(73) Patentinhaber: BAYER AG, 51368 Leverkusen (DE)
(72) Erfinder: Roschger, Peter, Dr., D-51063 Köln (DE)

(56) Entgegenhaltungen:
- EP-A- 0 527 383
- WO-A-80/01566
- CH-D- 559 664
- FR-A- 942 834
- GB-A- 966 865

## Beschreibung

Die vorliegende Erfindung betrifft ein Verfahren zum Massefärben von Kunststoffen. Die Massefärbung von Kunststoffen, beispielsweise von Thermoplasten ist bekannt aus z.B. GB-A-1 386 846, US-A-3 655 670.

Nachteilig bei den bekannten Verfahren ist, daß die zur Verwendung kommenden Farbstoffe nur farbschwache gelbe (vgl. GB-A-1 386 846, US-A-3 655 670) Farbtöne liefern.

Aus WO-A-8001566 sind bereits Benzofuran-2-one bekannt, die als Antioxidantien in polymere organische Materialien eingesetzt werden.

Die vorliegende Erfindung betrifft ein Verfahren zum Massefärben von Kunststoffen mit Farbstoffen der Formel (I) 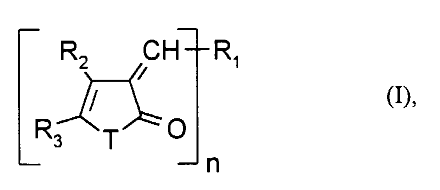 worin
- n: 1 oder 2, vorzugsweise 1 bedeutet,
- T: für 0 oder N-R₀ steht, worin
- R₀: H, Alkyl, Aryl, Acyl bedeutet oder mit R₃ oder R₂ zusammen einen 5- bis 7-gliedrigen Ring bildet,
- R₁: für n = 1, Aryl, Hetaryl oder Heterocyclylidenmethyl und
für n = 2, eine direkte Bindung oder Arylen bedeutet,
- R₂, R₃: unabhängig voneinander für H, Alkyl, Aryl, Aryl- oder Alkylsulfonyl, Cyano, einen Rest der Formel -COR stehen, worin R für Alkoxy, Amino, Alkylamino, Dialkylamino, Arylamino, Alkyl oder Aryl steht oder gemeinsam den Rest eines gegebenenfalls substituierten aromatischen, heteroaromatischen oder heteroaliphatischen Ringes bilden.

"Alkyl" steht hier und im folgenden soweit nicht näher definiert, für gegebenenfalls substituiertes offenkettiges Alkyl, offenkettiges Alkenyl oder gegebenenfalls substituiertes Cycloalkyl.

In einer bevorzugten Ausführungsform des Verfahrens kommen Farbstoffe der Formel (II) 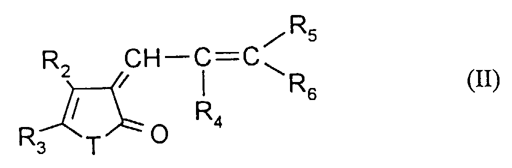 zum Einsatz, worin
- T: 0 oder N-R₀ bedeutet, worin
- R₀: die oben angegebene Bedeutung hat,
- R₄ und R₆: zusammen den Rest eines gegebenenfalls substituierten aromatischen, insbesondere Phenyl- oder Naphthyl-, oder heteroaromatischen, insbesondere eines gegebenenfalls ein- oder zweifach benzanellierten Thiophen-, Furan-, Pyrrol-, Thiazol-, Oxazol-, Imidazol-, Pyridin-, Pyran- oder Pyrimidin-Restes bilden und
- R₅: für H, Alkyl, Halogen, OH, Alkoxy, Acyloxy, Aryloxy, Alkylthio, Arylthio, Dialkylamino oder Acylamino steht, wobei die möglichen Substituenten an dem durch R₄ und R₆ gebildeten Ring vorzugsweise die Bedeutung von R₅ besitzen, oder
- R₅ und R₆: zusammen den Rest eines gegebenenfalls substituierten heterocyclischen Rings bilden und
- R₄: für H oder Alkyl steht und
- R₂ und R₃: die oben angegebene Bedeutung haben.

In einer besonders bevorzugten Ausführungsform des Verfahrens kommen Farbstoffe der Formel (III) 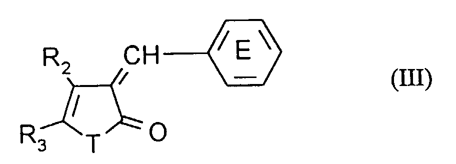 zum Einsatz, worin
- T, R₂ und R₃: die obengenannte Bedeutung haben,
und der Ring E gegebenenfalls mit Alkyl, Halogen, OH, Alkoxy, Aryloxy, Acyloxy, Dialkylamino, Acylamino, Alkylthio oder Arylthio substituiert ist.

Bevorzugt werden Farbstoffe der Formel (III), worin der Ring E ein bis drei voneinander unabhängige C₁-C₄-Alkoxyreste trägt, die gegebenenfalls durch Cl, CN, OH, Alkoxycarbonyl, Alkoxy oder Acyloxy substituiert sind oder zwei der Alkoxyreste über eine Methylenbrücke miteinander verbunden sind oder
- einen: Aryloxyrest, insbesondere ein Phenyloxy- oder Naphthyloxyrest trägt, der gegebenenfalls durch Alkyl, Cl, Br, Alkoxy oder Alkoxycarbonyl substituiert ist, oder
- einen: C₁-C₄-Dialkylaminorest trägt, der gegebenenfalls durch Cl, Phenyl, CN, OH, Alkoxy, Dialkylamino, Alkoxycarbonyl oder Acyloxy substituiert ist oder gegebenenfalls mit einer oder beiden ortho-Positionen des E-Ringes unter Bildung eines heterocyclischen Rings verknüpft ist, oder einen heterocyclischen Aminorest trägt,
- einen: C₁-C₄-Alkylthiorest trägt, der gegebenenfalls durch Phenyl, OH, Acyloxy oder Alkoxycarbonyl substituiert ist oder
- einen: Phenyl- oder Naphthylthiorest trägt, der gegebenenfalls durch Cl, Alkyl oder Alkoxycarbonyl substituiert ist und
gegebenenfalls weiter substituiert ist mit
- bis zu zwei: voneinander unabhängigen C₁-C₄-Alkylgruppen, Halogenatomen, insbesondere Cl oder Br und/oder
- einer: Acylamino-, Acyloxy- oder Hydroxy-Gruppe.

In einer besonders bevorzugten Ausführungsform ist die para-Position des Ringes E durch einen der obengenannten Alkoxy-, Aryloxy-, Alkylthio-, Arylthio- oder Dialkylaminoreste substituiert.

Besonders geeignete Ringe E sind beispielsweise:

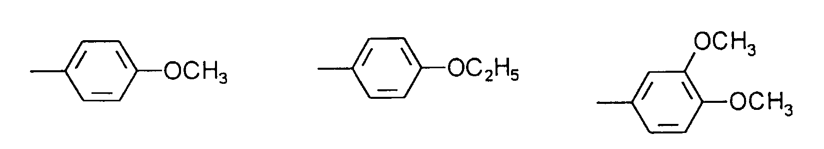

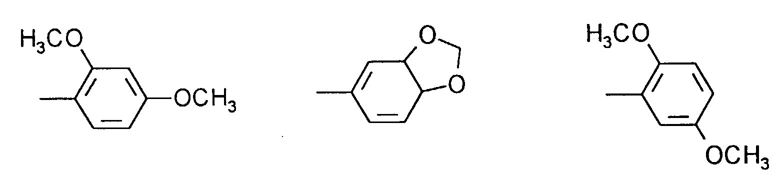

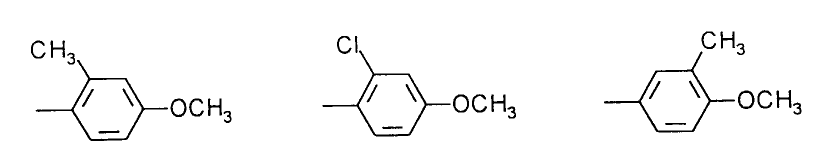

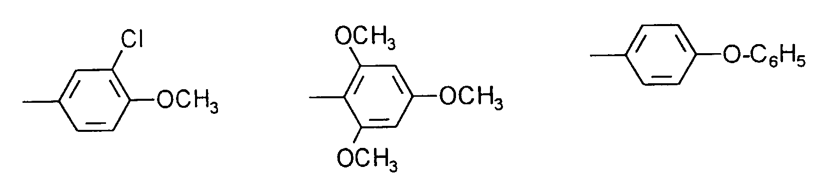

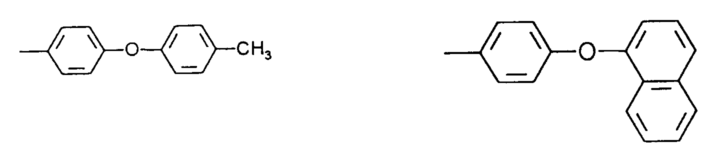

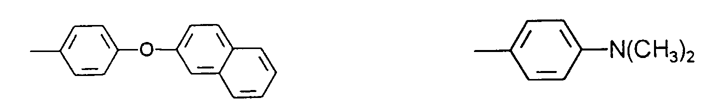

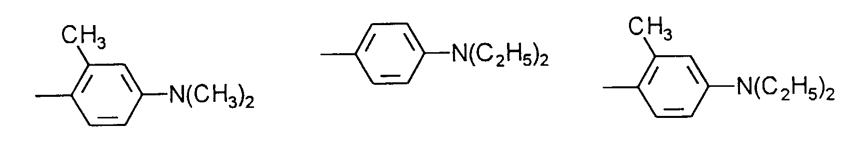

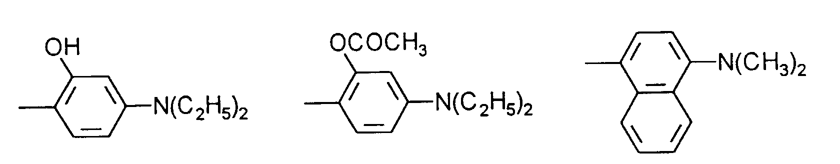

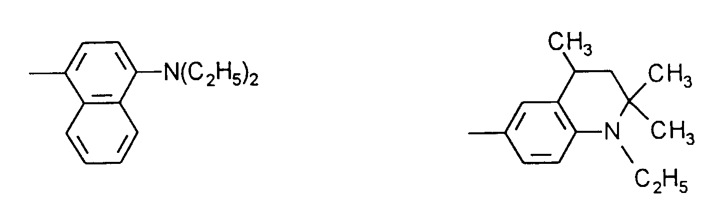

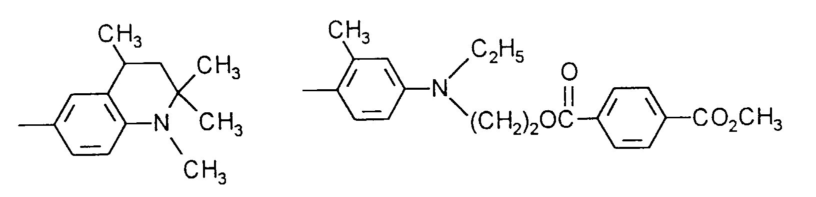

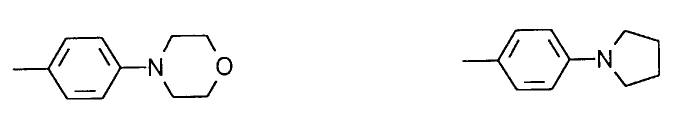

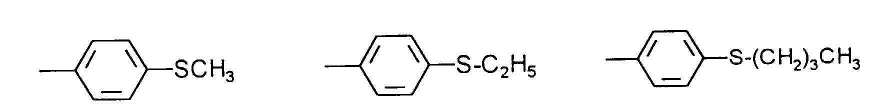

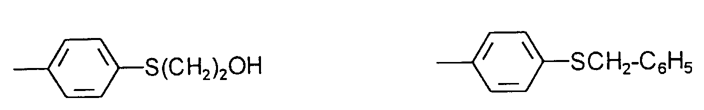

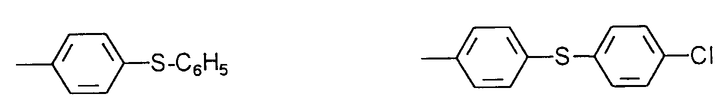

In einer weiterhin besonders bevorzugten Ausführungsform kommen Farbstoffe der Formel (II) zum Einsatz, worin
- R₅ und R₆: zusammen den Rest eines gegebenenfalls ein- oder zweifach benzanellierten und/oder weitersubstituierten Pyrrols, Thiazols, Oxazols, Imidazols, Pyridins, Pyrans oder Pyrimidins bilden, und R₂, R₃ und R₄ die obige Bedeutung besitzen.

Ganz besonders bevorzugt werden dabei Farbstoffe der Formel (IV) eingesetzt, 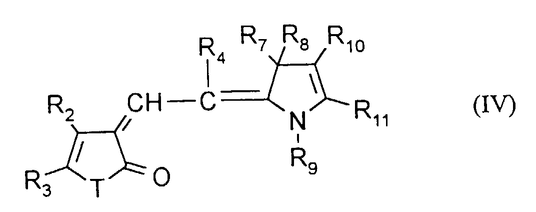 worin
- T, R₂ und R₃: die obigen Bedeutungen haben,
- R₄: die obige Bedeutung hat, vorzugsweise für H steht,
- R₇, R₈: unabhängig voneinander für C₁-C₄-Alkyl, vorzugsweise CH₃, C₂H₅ oder C₃H₇ stehen oder gemeinsam den Rest eines gegebenenfalls substituierten carbocyclischen 5- oder 6-Rings, vorzugsweise eine Tetra- oder Penta-Methylengruppe bilden,
- R₉: eine gegebenenfalls durch Phenyl, Cl, OH, CN, Alkoxycarbonyl, Alkoxy, Dialkylamino oder Acyloxy substituierte C₁-C₄-Alkylgruppe bedeutet und
- R₁₀, R₁₁: gemeinsam den Rest eines gegebenenfalls substituierten Benzol- oder Naphthalinringes bilden, wobei als bevorzugte Substituenten Cl, C₁-C₄-Alkyl, C₁-C₄-Alkoxycarbonyl und C₁-C₄-Alkoxy zu nennen sind.

Geeignete Reste der Formel 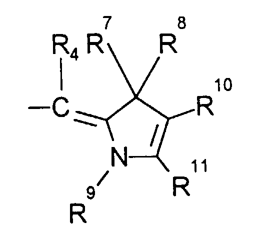 sind beispielsweise:

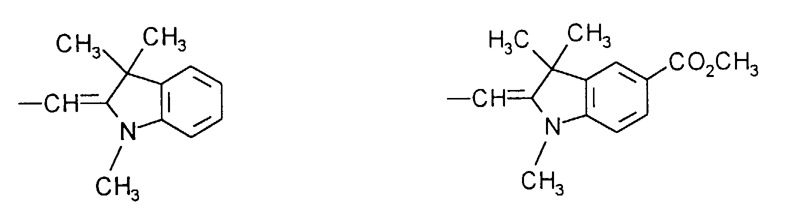

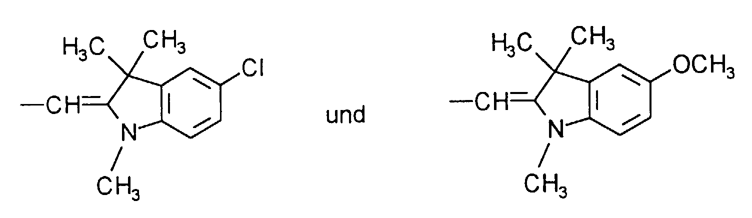

In einer anderen Ausführungsform des Verfahrens werden Farbstoffe der Formel (I) verwendet, worin n = 2 bedeutet und
R₁ für eine direkte Bindung oder einen Arylenrest, vorzugsweise Phenylen, insbesondere 1,4-Phenylen, steht und
T, R₀, R₂ und R₃ die obige Bedeutung haben.

In einer weiteren Ausführungsform des Verfahrens werden die oben beschriebenen Farbstoffe, insbesondere die der Formel (III) und (IV), bevorzugt verwendet, worin
R₂ für Wasserstoff steht und
R₃ für C₁-C₄-Alkyl, insbesondere CH₃ oder gegebenenfalls durch C₁-C₄-Alkoxy, vorzugsweise OCH₃, Cl, Br oder C₁-C₄-Alkyl, insbesondere Methyl, substituiertes Phenyl oder Naphthyl steht beispielsweise C₆H₅ oder 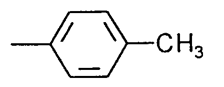 oder

- R₂ und R₃: gemeinsam einen Rest der Formel 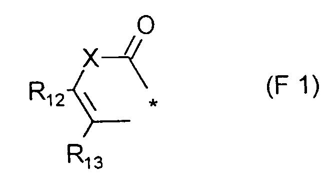 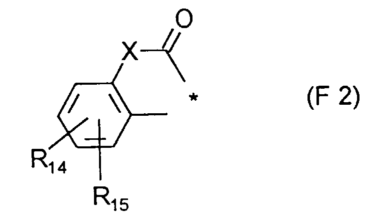 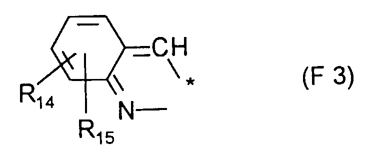 oder 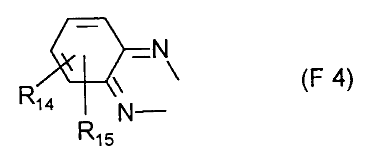
bilden,
wobei die mit * markierte Bindung die R₂-Verknüpfung kennzeichnet und worin
- X: für O oder N-R₁₆ steht, wobei R₁₆ H, C₁-C₆-Alkyl oder Phenyl bedeutet,
- R₁₂: für H, Phenyl oder C₁-C₄-Alkyl steht,
- R₁₃: für H, Phenyl, C₁-C₄-Alkyl, C₁-C₄-Alkoxycarbonyl, Aminocarbonyl, Mono- oder di-alkylaminocarbonyl, Arylaminocarbonyl, C₁-C₄-Alkylcarbonyl, Benzyl oder Cl steht,
- R₁₄ und R₁₅: unabhängig voneinander für H, Cl, C₁-C₄-Alkyl, C₁-C₄-Alkoxy oder C₁-C₄-Alkoxycarbonyl stehen oder gemeinsam den Rest eines gegebenenfalls mit diesen Substituenten substituierten Benzoringes bilden oder
- R₂ und R₃: den Rest eines gegebenenfalls substituierten Benzo- oder Naphthoringes bilden, wobei der Naphthoring vorzugsweise unsubstituiert und 1,2-, 2,1- oder 2,3-verknüpft ist und der Benzoring vorzugsweise durch
- 0 bis 2: voneinander unabhängigen C₁-C₆-Alkylgruppen oder Chloratomen oder
- 0 bis 1: C₁-C₄-Alkoxy oder C₁-C₄-Alkoxycarbonylreste substituiert ist.

Geeignete Reste, die zusammen von R₂ und R₃ gebildet werden, sind beispielsweise: 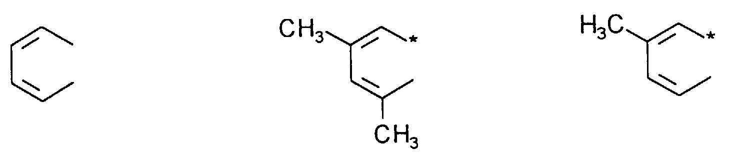 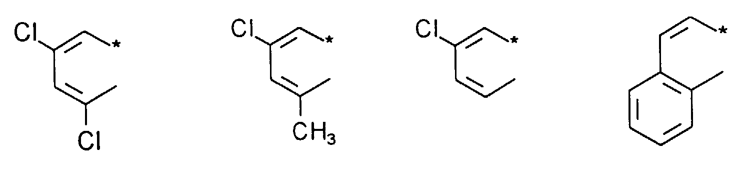 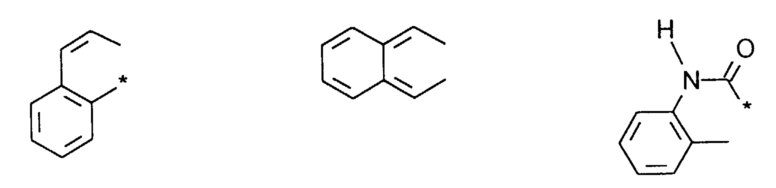 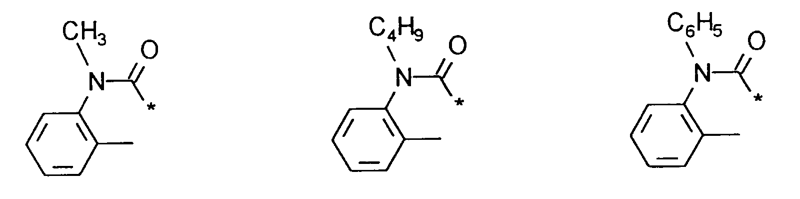 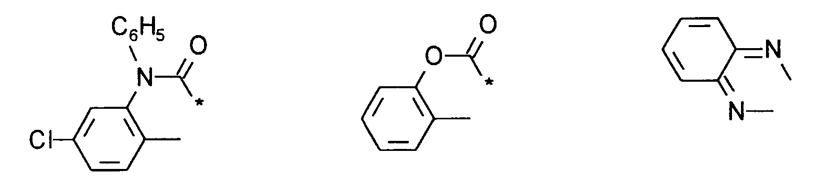 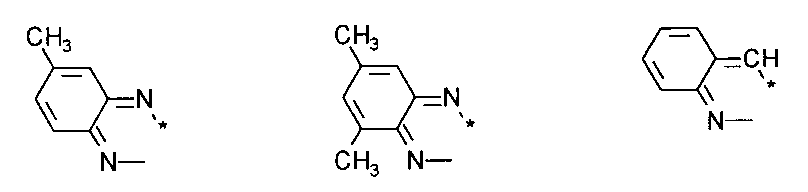 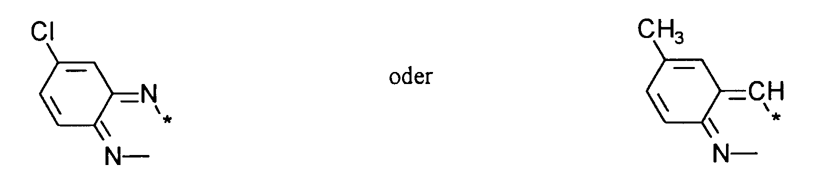 wobei die mit * markierte Bindung die R₂-Verknüpfung kennzeichnet.

In einer weiteren besonderen Ausführungsform steht R₀ für H, C₁-C₆-Alkyl oder Phenyl, insbesondere für H oder C₁-C₄-Alkyl, wie beispielsweise Methyl, Ethyl, n-Propyl, iso-Propyl, n-, sek- oder tert.-Butyl.

Farbstoffe der Formel (I), sind teilweise bekannt, beispielsweise: 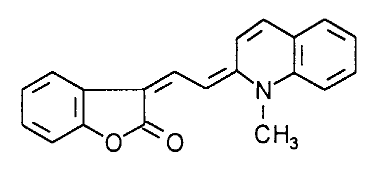 bekannt aus GB-A 966.865 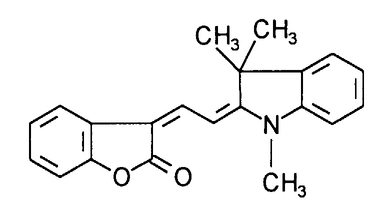 bekannt aus GB-A 899.917 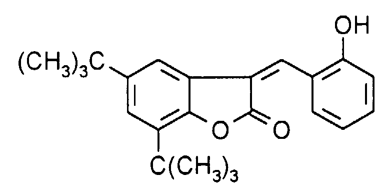 bekannt aus J.Chem.Soc.Perkin Trans. l(1992), 2981-2984 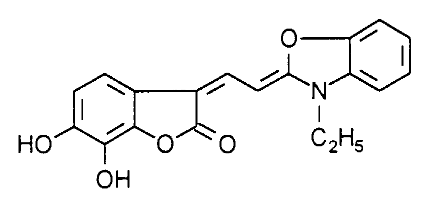 bekannt aus DE-A-1 912 102 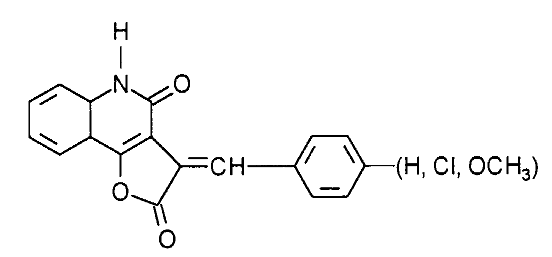 bekannt aus Synthesis 1990 S. 789-794 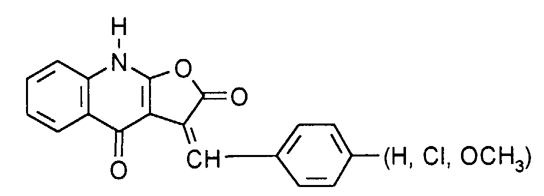 bekannt aus Synthesis 1990 S. 789-794 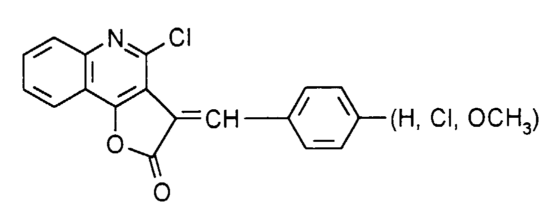 bekannt aus Synthesis 1990 S. 789-794
und Farbstoffe der Formel 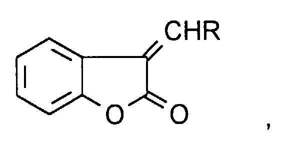 worin
- R: 2-Furyl, 2-Pyridyl, 3-Pyridyl, 4-Pyridyl, 3,4-Dichlorphenyl, 2,4-Dinitrophenyl, 2-Bromophenyl, 4-Bromophenyl, 2-Chlorophenyl, 3-Chlorophenyl, 4-Chlorophenyl, 2-Fluorophenyl, 2-Nitrophenyl, 3-Nitrophenyl, 4-Nitrophenyl, 4-Methylphenyl, 3,4-Methylendioxyphenyl, 2-Methoxyphenyl, 3-Methoxyphenyl, 4-Methoxyphenyl, 2-Ethoxyphenyl, 3,4-Dimethoxyphenyl, 4-Dimethylaminophenyl, 1-Naphthyl, 2-Naphthyl und 3,4-Diethoxyphenyl bedeutet aus J. Heterocycl. Chem. 1, (1964) S. 205-206 bekannt.

Ein Verfahren zur Herstellung der Farbstoffe der Formel (I), ist dadurch gekennzeichnet, daß man
a) Verbindungen der Formel 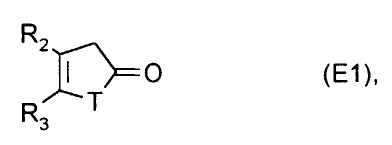 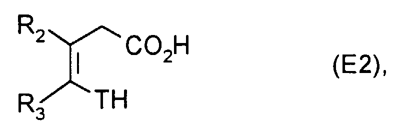 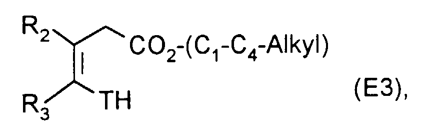 oder 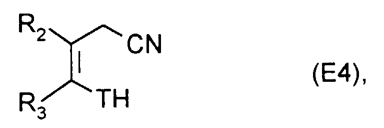 worin R₂ und R₃ gemeinsam die für die Farbstoffe der Formel (I) mit T = 0 genannte Bedeutung besitzen,
   mit Verbindungen der Formel

   R₁-CH=Y (E5),

   in welcher
   - R₁: für n = 1 oder 2 die obigen Bedeutungen besitzt und
   - Y: für O, (C₆-C₁₀-Aryl)N, insbesondere Phenyl-N, (C₁-C₄-Alkyl)₂N^{⊕}, insbesondere (CH₃)₂N^{⊕}, (C₆-C₁₀-Aryl)(C₁-C₅-Acyl)N^{⊕} , insbesondere (Phenyl)(CH₃CO)N^{⊕} oder (C₆-C₁₀-Aryl)(C₁-C₅-Alkyl)N^{⊕}, insbesondere (Phenyl)(CH₃)N^{⊕} steht,
   unter Abspaltung von YH₂ (und gegebenenfalls H₂O, Alkyl-OH bzw. NH₃) in einem Lösungsmittel oder in der Schmelze gegebenenfalls in Gegenwart eines Katalysators bei einer Temperatur von 0 bis 250°C umsetzt, wobei vorzugsweise das YH₂ durch den Zusatz bindender Mittel (z.B. Acetanhydrid) oder mittels physikalischer Methoden (z.B. destillativ) entfernt werden kann, oder
b) Verbindungen der Formel 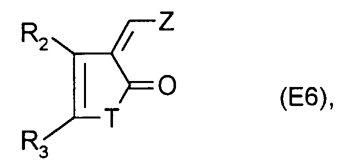 in welcher
   - R₂ und R₃: gemeinsam die für die Farbstoffe der Formel (I) mit T = 0 genannte Bedeutung besitzen,
   - Z: für OH, O(C₁-C₄-Alkyl), insbesondere -OCH₃, O(C₁-C₅-Acyl), insbesondere O-CO-CH₃, Cl, Br, (C₁-C₄-Alkyl)₂N, insbesondere (CH₃)₂N, (C₆-C₁₀-Aryl)NH, insbesondere Phenyl-NH, (C₆-C₁₀-Aryl)(C₁-C₄-Alkyl)N, insbesondere (Phenyl)(CH₃)N, (C₆-C₁₀-Aryl)(C₁-C₅-Acyl)N, insbesondere (Phenyl)(COCH₃)N, NH₂ oder (C₁-C₄-Alkyl)NH, insbesondere CH₃NH, steht und R₂ und R₃ die unter a) genannte Bedeutung haben,
   mit Verbindungen der Formel

   R₁-H (E7)

   unter Abspaltung von ZH gegebenenfalls in einem Lösungsmittel oder einer Schmelze bei einer Temperatur von 0 bis 250°C umsetzt. Vorteilhaft ist es auch hier, einen Katalysator zuzusetzen und ZH zu binden.

Bevorzugt wird nach der Herstellungsvariante a) unter Verwendung der Verbindung (E1) oder (E2) verfahren.

Allgemein als Lösungsmittel für die beiden genannten Verfahren eignen sich Alkohole wie z.B. Ethanol, Methanol, Propanole, Butanole usw., Carbonsäuren wie z.B. Ameisensäure, Essigsäure, Propionsäure usw., Ester, z.B. Ethylacetat, polare aprotische Lösungsmittel, z.B. Dimethylformamid, N-Methylpyrrolidon, Dimethylacetamid, Dimethylsulfoxid usw., Aromaten, z.B. Benzol, Toluol, Xylole, Chlor-, Dichlor-, Trichlorbenzol usw., Ether, z.B. Tetrahydrofuran, Dioxan, Methyl-t-butylether usw., Glykole und deren Ether, z.B. Mono-, Di-, Tri-, Tetraethylenglykol, Propylenglykol, deren Methyl-, Ethyl-, Butyl-ether usw., Halogenaliphaten, z.B. Dichlormethan, Dichlorethan, Chloroform usw.

Als Katalysatoren kommen saure wie basische in Frage.

Als saure Katalysatoren seien genannt: Carbonsäuren, z.B. Essigsäure, Propionsäure, Chloressigsäure, Benzoesäure usw., Sulfonsäuren, z.B. Toluolsulfonsäure, Methansulfonsäure usw., anorganische Säuren wie z.B. Schwefel-, Salz-, Phosphor-, Bromwasserstoffsäure usw., Zinkchlorid, Aluminiumchlorid, Bortrifluorid usw.

Basische geeignete Katalysatoren sind beispielsweise: organische Basen, z.B. Amine wie Triethylamin, Dialkylamin, Piperidin, Pyrrolidin, Morpholin, N,N-Dimethylanilin usw., Alkoholate, z.B. Natriummethylat, Kalium-t-butylat usw., Carbonsäuresalze, z.B. Natrium- oder Kaliumacetat usw., Alkali- oder Erdalkalioxide, -hydroxide oder -carbonate z.B. Natrium-, Kaliumhydroxid, Calciumoxid, Magnesiumoxid, Natriumcarbonat, Kaliumcarbonat, Natriumhydrogencarbonat usw., Ammoniak, Tetrabutylammoniumhydroxid usw.

Als Umsetzungstemperatur für die unter a) bzw. b) beschriebenen Herstellungsverfahren kommt der Bereich von 0 bis 250°C in Frage, vorzugsweise zwischen 15 und 220°C.

Die bereits bekannten Farbstoffe der Formel (I) können in Analogie zum obigen Verfahren hergestellt werden, wobei T = O oder N-R₀ bedeutet und R₀ die obige Bedeutung hat.

Für Farbstoffe der Formel (I) mit T = N-R₀ wird bevorzugt nach der Herstellungsvariante (a) unter Verwendung der Verbindung (E1) mit T = N-R₀ verfahren. Verbindungen der Formel (I) mit T = N-R₀ sind zum Teil bekannt aus J. Chem. Soc. Perkin Trans. II 4 (1984), 615-619; Khim. Geterosikl. Soedin. 1972, 1237.

Die aufgeführten Ausgangsprodukte worin T = O sind im Handel erhältlich oder gut zugänglich z.B. nach WO 9208703; J. Org. Chem. 16 (1951), S. 1588, 1590, u.a.

Die Ausgangsprodukte, worin T = N-R₀ und R₀ die obengenannte Bedeutung hat, sind im Handel erhältlich oder gut zugänglich z.B. nach J. Med. Chem. 32 (1989), S. 437-444; EP-A-252 713 oder US-A-4 690 943.

Unter Massefärben werden hierbei insbesondere Verfahren verstanden, bei denen der Farbstoff in die geschmolzene Kunststoffmasse eingearbeitet wird, z.B. unter Zuhilfenahme eines Extruders, oder bei dem der Farbstoff bereits Ausgangskomponenten zur Herstellung des Kunststoffes, z.B. Monomeren vor der Polymerisation, zugesetzt wird.

Besonders bevorzugte Kunststoffe sind Thermoplaste, beispielsweise Vinylpolymere, Polyester und Polyamide.

Geeignete Vinylpolymere sind Polystyrol, Styrol-Acrylnitril-Copolymere, Styrol-Butadien-Copolymere, Styrol-Butadien-Acrylnitril-Terpolymere, Polymethacrylat u.a..

Weiterhin geeignete Polyester sind: Polyethylenterephthalate, Polycarbonate und Celluloseester.

Bevorzugt sind Polystyrol, Styrol-Mischpolymere, Polycarbonate und Polymethacrylat. Besonders bevorzugt ist Polystyrol.

Die erwähnten hochmolekularen Verbindungen können einzeln oder in Gemischen, als plastische Massen oder Schmelzen vorliegen.

Die erfindungsgemäßen Farbstoffe werden in feinverteilter Form zur Anwendung gebracht, wobei Dispergiermittel mitverwendet werden können aber nicht müssen.

Werden die Farbstoffe (I) nach der Polymerisation eingesetzt, so werden sie mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und diese durch Rühren homogen verteilen. Das derart vorgefärbte Material wird dann wie üblich z.B. durch Verspinnen zu Borsten, Fäden usw. oder durch Extrusion oder im Spritzguß-Verfahren zu Formteilen weiterverarbeitet.

Da die Farbstoffe der Formel (I) gegenüber Polymerisationskatalysatoren, insbesondere Peroxiden, beständig sind, ist es auch möglich, die Farbstoffe den monomeren Ausgangsmaterialien für die Kunststoffe zuzusetzen und dann in Gegenwart von Polymerisationskatalysatoren zu polymerisieren. Dazu werden die Farbstoffe vorzugsweise in den monomeren Komponenten gelöst oder mit ihnen innig vermischt.

Die Farbstoffe der Formel (I) werden vorzugsweise zum Färben der genannten Polymeren in Mengen von 0,0001 bis 1 Gew.-%, insbesondere 0,01 bis 0,5 Gew.-%, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann in einer Menge von 0,01 bis 10 Gew.-%, vorzugsweise 0,1 bis 5 Gew.-%, bezogen auf die Polymermenge, verwendet werden.

Nach dem erfindungsgemäßen Verfahren erhält man transparente bzw. gedeckte brillante, grünstichig gelbe bis violette Färbungen mit guter Hitzebeständigkeit sowie guter Licht- und Wetterechtheit.

In das erfindungsgemäße Verfahren können auch Mischungen verschiedener Farbstoffe der Formel (I) und/oder Mischungen von Farbstoffen der Formel (I) mit anderen Farbstoffen und/oder anorganischen bzw. organischen Pigmenten eingesetzt werden.

Die folgenden Beispiele dienen zur Erläuterung der vorliegenden Erfindung, ohne sie jedoch einzuschränken.

"Teile" sind als Gewichtsteile zu verstehen, soweit nicht anders angegeben.

Die in den Beispielen verwendeten Abkürzungen bedeuten:
Me = Methyl
Et = Ethyl
Ph = Phenyl
Ac = Acetyl

### Beispiel 1

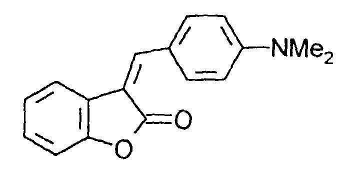

### A) Darstellung

Eine Mischung aus 2,0 g Benzofuranon der Formel 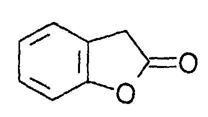 2,3 g 4-Dimethylaminobenzaldehyd, 0,2 ml Piperidin und 40 ml Toluol werden 1 Stunde am Wasserabscheider unter Rückfluß erhitzt. Nach dem Erkalten wird der entstandene Niederschlag abgesaugt, mit wenig Toluol und Methanol gewaschen und anschließend getrocknet.
Ausbeute: 2,9 g

### B) Färbebeispiele

### Beispiel a)

100 Teile Polystyrol-Granulat und 0,02 Teile eines Farbstoffes der obigen Formel werden im Trommelmischer während 15 Minuten intensiv vermischt. Das trocken angefärbte Granulat wird bei 240°C auf einer Schneckenspritzgießmaschine verarbeitet. Man erhält transparente, gelbe Platten von sehr guter Lichtechtheit. Anstelle von Polystyrol-Polymerisat können auch Mischpolymerisate mit Butadien und Acrylnitril verwendet werden. Setzt man zusätzlich 0,5 Teile Titandioxid zu, so erhält man farbstarke gedeckte Färbungen.

### Beispiel b)

0,015 Teile des Farbstoffes aus Beispiel A) und 100 Teile Polymethylmethacrylat werden trocken vermischt und auf einem 1-Wellenextruder bei 230°C homogenisiert. Das als Strang aus dem Extruder austretende Material wird granuliert. Es kann anschließend zu Formen verpreßt werden. Man erhält einen transparent gelb gefärbten Kunststoff mit guter Licht- und Wetterechtheit.

### Beispiel c)

100 Teile eines handelsüblichen Polycarbonats werden in Form von Granulat mit 0,03 Teilen des Farbstoffes aus Beispiel A) trocken gemischt. Das so bestäubte Granulat wird auf einem 2-Wellenextruder bei 290°C homogenisiert. Man erhält eine transparente gelbe Färbung von guter Lichtechtheit. Das gefärbte Polycarbonat wird als Strang aus dem Extruder ausgetragen und zu Granulat verarbeitet. Das Granulat kann nach den üblichen Methoden der Konfektionierung thermoplastischer Massen verarbeitet werden.

Arbeitet man wie oben beschrieben, aber unter Zusatz von 1 % Titandioxid, so erhält man eine gelbe gedeckte Färbung.

### Beispiel d)

Mit 100 Teilen Styrol-Acrylnitril-Copolymerisat werden 0,04 Teile des Farbstoffes aus Beispiel A) trocken vermischt und in einem 2-Wellenextruder bei 190°C homogenisiert, granuliert und dann zu Formen auf übliche Weise verpreßt. Man erhält einen transparentgelben Kunststoff von guter Lichtechtheit.

### Beispiel e)

0,025 Teile des Farbstoffes aus Beispiel A) werden mit 100 Teilen Polyethylenterephthalat einer transparenten Type vermischt und in einem 2-Wellenextruder bei 280°C homogenisiert. Man erhält eine transparente, gelbe Färbung mit guter Lichtechtheit. Nach anschließender Granulierung kann der eingefärbte Kunststoff nach den üblichen Methoden der thermoplastischen Verformung verarbeitet werden. Arbeitet man unter Zusatz von 1 % Titandioxid, so erhält man eine gedeckte Färbung.

### Beispiel f)

In 98,9 Teilen Styrol werden 0,05 Teile tert.-Dodecylmercaptan sowie 0,05 Teile des Farbstoffes aus Beispiel A) gelöst. Diese Lösung dispergiert man in einer Lösung aus 200 Teilen entsalztem Wasser, 0,3 Teilen teilverseiftem Polyvinylacetat (z.B. Mowiol® 50/88 der Fa. Hoechst) und 0,05 Teilen Dodecylbenzolsulfonat. Nach Zugabe von 0,1 Teilen Dibenzoylperoxid in 1 Teil Styrol wird die Dispersion unter kräftigem Rühren auf 80°C erhitzt und die Polymerisation gestartet. Bei Anwendung folgender Polymerisationsbedingungen: 4 h bei 80°C, 2 h bei 90°C, 3 h bei 110°C, 2 h bei 130°C, erhält man das Polymerisat in einer Ausbeute von 98 % der Theorie. Das Polymerisat fällt in Form von Perlen an, die je nach Rührbedingungen einen Durchmesser von 0,1 bis 1,5 mm (D₅₀-Wert) aufweisen. Das Polymerisat wird durch Filtration von Serum getrennt, bei 110°C auf eine Restfeuchte von 0,5 % getrocknet. Nach dem Aufschmelzen in einem Mischaggregat (Heißwalze) werden 0,5 % Zinkstearat und 0,2 % Ionol zugemischt und das Polymerisat granuliert.

Das Polymerisat kann nach den üblichen Methoden der thermoplastischen Verformung, z.B. im Spritzguß-Verfahren, zu gelben, transparenten Formteilen verarbeitet werden.

### Beispiele g)

In 74,8 Teilen Styrol und 25 Teilen Acrylnitril werden 0,2 Teile tert.-Dodecylmercaptan sowie 0,01 Teile des Farbstoffes aus Beispiel A) gelöst, welche anschließend in einer Lösung aus 200 Teilen vollentsalztem Wasser und 0,2 Teilen eines mit Natriumhydroxid neutralisierten Copolymerisats von Styrol und Maleinsäureanhydrid dispergiert wird. Nach Zusatz von 0,1 Teilen Dibenzoylperoxid, gelöst in einem Teil Styrol, wird die Dispersion unter kräftigem Rühren auf 80°C erhitzt und die Polymerisation gestartet. Nach der Polymerisation wie im Beispiel f) wird auch in gleicher Weise, wie im Beispiel angegeben, aufgearbeitet. Als Schmiermittel wird 0,5 % Zinkstearat und als Alterungsschutzmittel 0,5 % Ionol auf der Heißwalze eingearbeitet. Das granulierte Polymerisat läßt sich zu transparenten gelben Formteilen verspritzt.

### Beispiel h)

In einem kontinuierlich arbeitenden, überflutet gefahrenen Vorreaktor wird eine Lösung aus 99,95 Teilen Styrol, 0,04 Teilen des Farbstoffes aus Beispiel A) und 0,01 Teilen Di-tert.-butylperoxid eingefahren und bei einer Temperatur von 75°C anpolymerisiert. Die aus dem Vorreaktor austretende, anpolymerisierte Lösung (Polystyrol-Gehalt 20 %) wird in einem 2-Wellenschneckenaggregat eingeführt. Die beiden Wellen laufen mit 20 Upm gegenläufig. Die vier heiz- bzw. kühlbaren Segmente der Schneckenmaschine werden in der Reihenfolge Produkteintritt - Produktaustritt auf 110°C, 130°C, 160°C, 180°C gehalten. Das Polymerisat verläßt den Schneckenreaktor mit einer Feststoffkonzentration von 80 %. In einem nachgeschalteten Extruder werden 3 Gew.-Teile Ionol und 5 Gew.-Teile Octylalkohol pro 1000 Gew.-Teile Polymerlösung zudosiert, das Polymerisat entgast und anschließend granuliert. Das gelb gefärbte Granulat kann zu Formteilen verarbeitet werden.

### Beispiel i)

0,02 Teile des Farbstoffes aus Beispiel A) werden in 74,97 Teilen Styrol und 25 Teilen Acrylnitril bzw. Methacrylnitril gelöst. Nach Zugabe von 0,01 Teilen Di-tert.-butylperoxid wird die so erhaltene Lösung in einem kontinuierlich arbeitenden, überflutet gefahrenen Vorreaktor eingefahren. Die Polymerisation und Aufarbeitung erfolgt wie im Beispiel h) angegeben. Das transparente, gelbe Granulat kann nach den üblichen Methoden der Verarbeitung thermoplastischer Massen zu Profilen und Platten weiterverarbeitet werden.

### Beispiel k)

In 99,97 Teilen Methylmethacrylat werden 0,03 Teile des Farbstoffes aus Beispiel A) gelöst. Nach Zugabe von 0,1 Teilen Dibenzoylperoxid wird die Lösung auf 120°C erhitzt und die Polymerisation gestartet. Nach 30 Minuten wird das anpolymerisierte Methylmethacrylat zwischen zwei Glasplatten bei 80°C während 10 Stunden auspolymerisiert. Man erhält gelbe, transparente Polymethylmethacrylat-Platten.

### Beispiel l)

100 Teile Polyamid-6-Schnitzel, erhalten durch Polymerisation von ε-Caprolactam, werden mit 0,05 Teilen des Farbstoffes aus Beispiel A) in einer Schüttelmaschine innig vermischt. Die so erhaltenen gepuderten Schnitzel werden bei 260°C in einem Extruder aufgeschmolzen, die erhaltene Schmelze durch eine Einloch-Düse vom Durchmesser 0,5 mm gepreßt und der austretende Faden mit einer Geschwindigkeit von ca. 25 m/Min. abgezogen. Der Faden läßt sich in heißem Wasser auf das 4-fache verstrecken. Erhalten wird ein transparent gelb gefärbter Faden von ausgezeichneter Lichtechtheit. Will man eine gedeckte Färbung erhalten, so gibt man zusätzlich 0,5 Teile Titandioxid zu.

Die Verweilzeit im Extruder kann ohne Beeinträchtigung des Farbtons bis zu 30 Minuten betragen.

### Beispiel 2

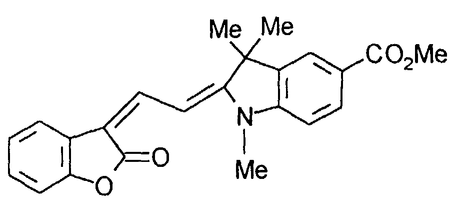

Eine Mischung aus 1,34 g Benzofuranon, 3,2 g eines Aldehyds der Formel 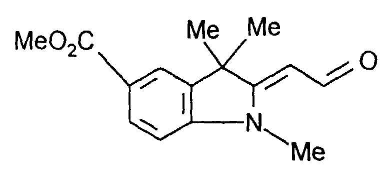 0,2 ml Piperidin und 40 ml Toluol werden 2,5 Stunden am Wasserabscheider unter Rückfluß erhitzt. Nach dem Erkalten wird das ausgefallene Produkt abgesaugt und aus siedendem Toluol umgelöst.
Ausbeute: 2,2 g.
Analog den Färbebeispielen aus Beispiel 1 erhält man farbstarke Gelbtöne mit guten Echtheiten.

### Beispiel 3

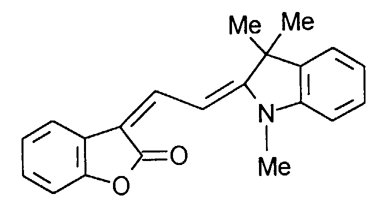

Eine Mischung aus 1,34 g Benzofuranon, 2,01 g der Verbindung der Formel, 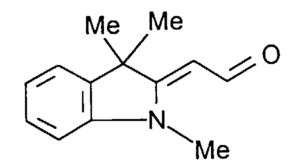 0,2 ml Piperidin und 40 ml Toluol wird 1,5 Stunden unter Rückfluß am Wasserabscheider erhitzt. Anschließend entfernt man das Toluol im Vakuum und überschichtet das harzige Produkt mit Cyclohexan. Nach einigen Stunden zerreibt man das erstarrte Produkt mit Cyclohexan und saugt den Niederschlag danach ab. Ausbeute: 2,6 g.

Analog den Färbebeispielen aus Beispiel 1 gefärbt, erhält man intensive, gelbe Färbungen.

### Beispiel 4

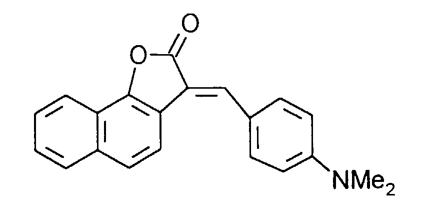

Eine Mischung aus 1,84 g des Naphthofuranons der Formel 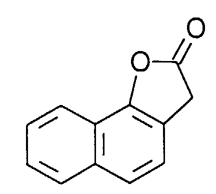 1,5 g 4-Dimethylaminobenzaldehyd, 0,2 ml Piperidin und 25 ml Toluol wird 2 Stunden am Wasserabscheider unter Rückfluß erhitzt. Nach dem Erkalten wird der entstandene Niederschlag abgesaugt und mit Methanol gewaschen. Ausbeute: 2,6 g.

Färbt man den obigen Farbstoff analog den Färbebeispielen aus Beispiel 1, so erhält man echte, farbstarke Gelbtöne.

### Beispiel 5

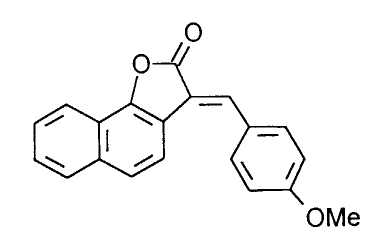

Eine Mischung aus 2,76 g des Naphthofuranons aus Beispiel 4, 2,04 g 4-Methoxybenzaldehyd, 0,2 ml Piperidin und 30 ml Toluol wird 2 Stunden am Wasserabscheider unter Rückfluß erhitzt. Nach einigen Stunden wird der Niederschlag abgesaugt und mit Methanol gewaschen. Ausbeute: 3,3 g.

Analog den Färbebeispielen aus Beispiel 1 gefärbt, liefert der obige Farbstoff farbstarke grünstichig gelbe Färbungen.

### Beispiel 6

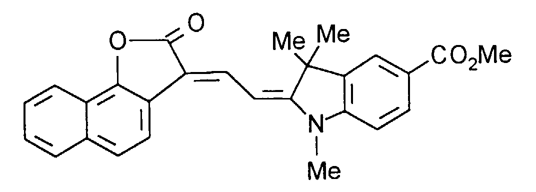

1,84 g des Naphthofurans aus Beispiel 4, 3,2 g des Aldehyds aus Beispiel 2, 0,2 ml Piperidin und 40 ml Toluol werden am Wasserabscheider zum Sieden erhitzt. Nach 4 Stunden filtriert man die Reaktionsmischung und fällt aus dem Filtrat das Produkt in der Kälte mit viel Methanol. Ausbeute: 1,1 g.

Färbt man den obigen Farbstoff analog den Färbebeispielen aus Beispiel 1, so erhält man farbstarke Orangetöne.

### Beispiel 7

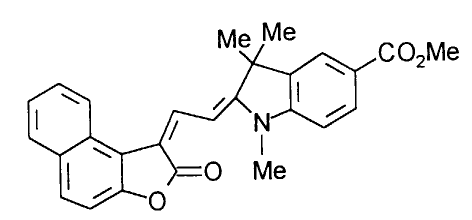

Eine Mischung aus 2,0 g des Furanons der Formel 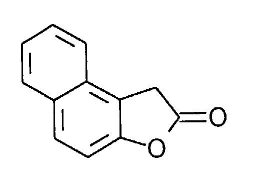 2,6 g des Aldehyds aus Beispiel 2, 0,2 ml Piperidin und 30 ml Xylol wird 2 Stunden am Wasserabscheider erhitzt. Nach dem Erkalten saugt man den entstandenen Niederschlag ab und kristallisiert ihn aus Pyridin/Methanol um. Ausbeute: 1,0 g.

In Kunststoffen liefert der Farbstoff analog den Färbebeispielen aus Beispiel 1 intensive, rote Färbungen.

### Beispiel 8

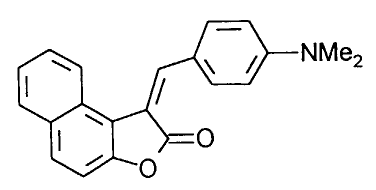

Eine Mischung aus 2,0 g des Furanons aus Beispiel 7, 1,5 g 4-Dimethylaminobenzaldehyd, 0,2 ml Piperidin und 30 ml Toluol werden 2 Stunden am Wasserabscheider erhitzt. Anschließend saugt man den Niederschlag ab und kristallisiert ihn aus Methanol um. Ausbeute: 0,9 g.

Obiger Farbstoff färbt Kunststoffe entsprechend den Färbebeispielen aus Beispiel 1 in kräftigen Orangetönen.

### Beispiel 9

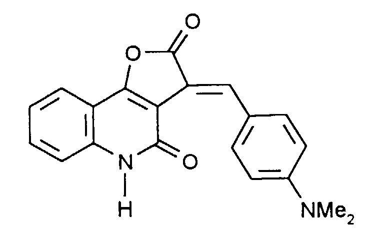

Eine Mischung aus 1,6 g eines Chinolons der Formel 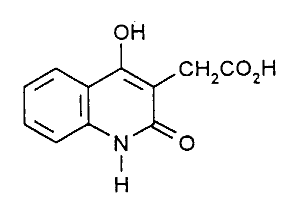 1,15 g 4-Dimethylaminobenzaldehyd, 10 ml Eisessig und 12,5 ml Essigsäureanhydrid wird 1 Stunde unter Rückfluß erhitzt. Nach dem Abkühlen saugt man den entstandenen Niederschlag ab und wäscht ihn mit wenig Eisessig und Methanol. Ausbeute: 1,8 g.

Farbstarke orange Färbungen liefert der Farbstoff, wenn er analog den Färbebeispielen aus Beispiel 1 ausgefärbt wird.

### Beispiel 10

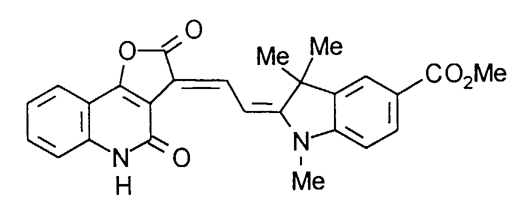

1,3 g des Chinolons aus Beispiel 9, 2,0 g des Aldehyds aus Beispiel 2, 10 ml Eisessig und 12,5 ml Acetanhydrid werden 30 Minuten unter Rückfluß erhitzt. Anschließend saugt man den Niederschlag kalt ab und wäscht mit Methanol nach. Ausbeute: 2,4 g.

Der Farbstoff zeigt, entsprechend den Färbebeispielen aus Beispiel 1 gefärbt, intensive orangerote Farbtöne mit guten Echtheiten.

### Beispiel 11

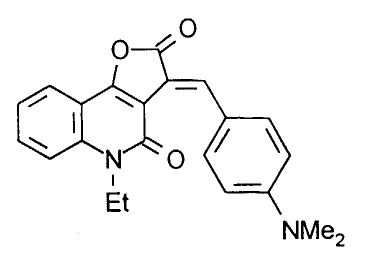

Eine Mischung aus 9,8 g des Chinolons der Formel 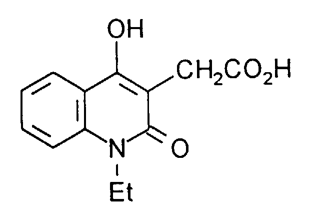 6,7 g 4-Dimethylaminobenzaldehyd, 20 ml Eisessig und 25 ml Acetanhydrid wird 30 Minuten zum Sieden erhitzt und anschließend heiß abgesaugt. Der Niederschlag wird mit wenig Eisessig und Methanol gewaschen. Ausbeute: 13,3 g.

Analog den obigen Färbebeispielen gefärbt, erhält man gelbe Färbungen mit guten Echtheiten.

### Beispiel 12

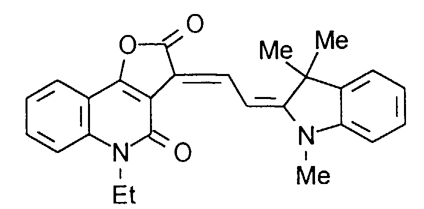

3,7 g des Chinolons aus Beispiel 11, 3,16 g des Aldehyds aus Beispiel 3, 20 ml Eisessig und 25 ml Acetanhydrid werden 30 Minuten unter Rückfluß erhitzt. Das beim Abkühlen ausfallende Produkt wird abgesaugt, mit Eisessig und Aceton gewaschen und bei 70°C im Vakuum getrocknet. Ausbeute: 5,5 g.

Entsprechend den Färbebeispielen aus Beispiel 1 ausgefärbt, liefert der obige Farbstoff farbstarke Orangetöne.

### Beispiel 13

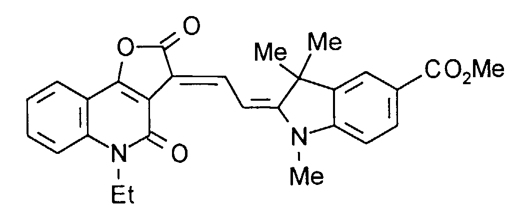

Eine Mischung aus 3,7 g des Chinolons aus Beispiel 11, 5,04 g des Aldehyds aus Beispiel 2, 20 ml Eisessig und 25 ml Essigsäureanhydrid erhitzt man 30 Minuten zum Sieden und läßt sie dann erkalten. Der entstandene Niederschlag wird abgesaugt, mit Essigsäure, Methanol und Aceton gewaschen und getrocknet. Ausbeute: 6,3 g.

Analog den obigen Färbebeispielen aus Beispiel 1 gefärbt, erhält man mit obigem Farbstoff farbstarke orange Färbungen.

### Beispiel 14

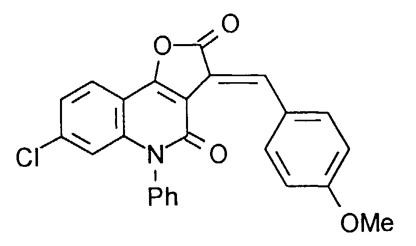

Eine Mischung aus 3,3 g des Chinolons der Formel 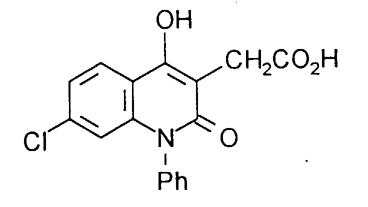 1,6 g 4-Methoxybenzaldehyd, 20 ml Eisessig und 25 ml Acetanhydrid wird 5 Stunden unter Rückfluß erhitzt. Der entstandene Niederschlag wird bei ca. 80°C abgesaugt und mit Methanol nachgewaschen. Ausbeute: 1,6 g.

Grünstichig gelbe Färbungen erhält man, wenn man den Farbstoff analog den obigen Färbebeispielen aus Beispiel 1 ausfärbt.

### Beispiel 15

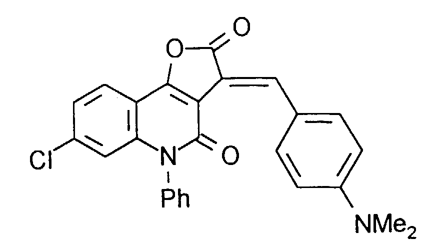

3,3 g des Chinolons aus Beispiel 14, 1,8 g 4-Dimethylaminobenzaldehyd, 40 ml Eisessig und 50 ml Essigsäureanhydrid werden 45 Minuten unter Rückfluß erhitzt. Danach wird der Niederschlag bei ca. 80°C abgesaugt und mit Methanol gewaschen. Ausbeute: 4,3 g.

Analog zu den Färbebeispielen 1B) gefärbt, ergibt der Farbstoff orangerote Farbtöne.

### Beispiel 16

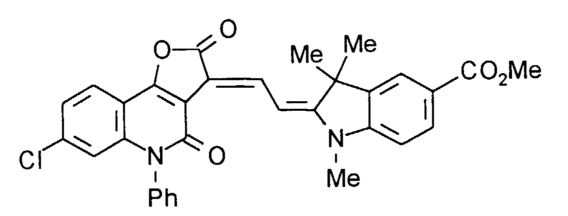

4,42 g des Chinolons aus Beispiel 14, 5,04 g des Aldehyds aus Beispiel 2, 20 ml Eisessig und 25 ml Acetanhydrid werden 30 Minuten zum Sieden erhitzt. Danach kühlt man auf Raumtemperatur ab, saugt den Niederschlag ab und wäscht mit Methanol und Aceton nach. Ausbeute: 7,1 g.

Entsprechend der Färbebeispiele 1B) ausgefärbt, liefert der obige Farbstoff intensive, blaustichig rote Färbungen.

### Beispiel 17

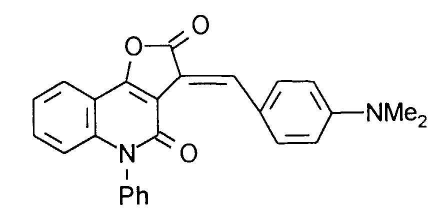

Eine Mischung aus 2,77 g der Verbindung der Formel 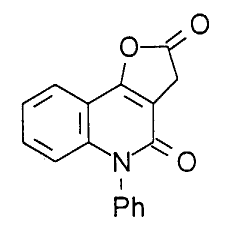 1,5 g 4-Dimethylaminobenzaldehyd, 12 ml Acetanhydrid und 10 ml Eisessig wird 15 Minuten zum Sieden erhitzt. Der entstandene Niederschlag wird heiß abgesaugt und mit Eisessig und Methanol gewaschen. Ausbeute: 3,7 g.

Analog zu den Färbebeispielen 1B) gefärbt erhält man kräftige, rotstichig gelbe Färbungen.

### Beispiel 18

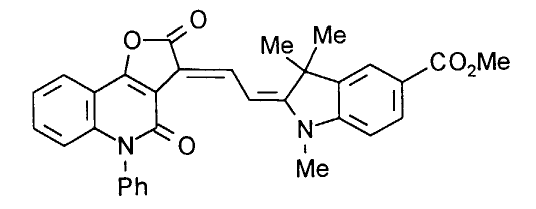

Eine Lösung von 2,77 g der Verbindung der Formel 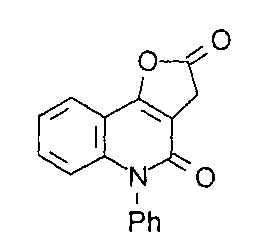 und 3,15 g des Aldehyds aus Beispiel 2 in 12,5 ml Acetanhydrid und 10 ml Essigsäure wird 1 Stunde unter Rückfluß erhitzt. Danach läßt man erkalten und saugt den entstandenen Niederschlag ab. Das Produkt wird mit Eisessig und Methanol gewaschen und getrocknet.
Ausbeute: 4,8 g

Entsprechend der Färbebeispiele 1B) gefärbt ergibt der obige Farbstoff kräftige Rottöne in Kunststoffen.

### Beispiel 19

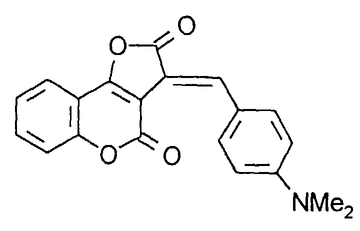

Eine Mischung aus 1,65 g des Cumarins der Formel 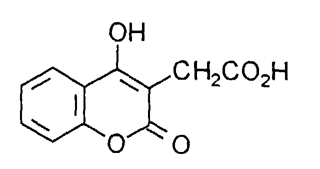 1,1 g 4-Dimethylaminobenzaldehyd, 8 ml Acetanhydrid und 7 ml Essigsäure wird 1,5 Stunden zum Sieden erhitzt. Der entstandene Niederschlag wird bei 70°C abgesaugt, mit Eisessig und Methanol gewaschen und getrocknet. Ausbeute: 2,5 g.

Der obige Farbstoff färbt Kunststoffe gemäß der Färbebeispiele 1B) in intensiv orangen Tönen.

### Beispiel 20

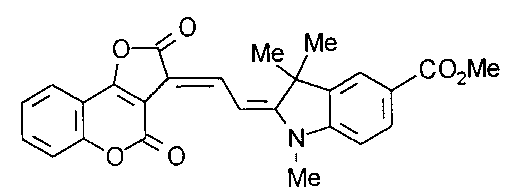

1,65 g des Cumarins der Formel 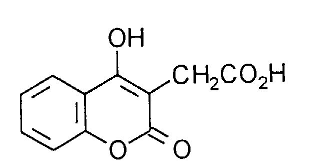 und 2,4 g des Aldehyds aus Beispiel 2 werden in 12 ml Essigsäureanhydrid und 10 ml Essigsäure 45 Minuten zum Sieden erhitzt. Nach dem Erkalten wird das Produkt abgesaugt und mit Eisessig und Methanol gewaschen. Ausbeute: 3,3 g.

In Kunststoffen analog zu den Färbebeispielen 1B) gefärbt, erhält man kräftige Rottöne mit guter Lichtechtheit.

### Beispiel 21

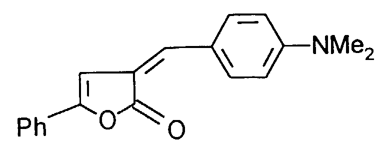

Eine Mischung aus 3,56 g 3-Benzoylpropionsäure, 2,98 g 4-Dimethylaminobenzaldehyd, 12,5 ml Acetanhydrid und 10 ml Eisessig wird 1 Stunde unter Rückfluß erhitzt. Nach dem Erkalten wird der entstandene Niederschlag abgesaugt und aus 20 ml Eisessig umkristallisiert. Ausbeute: 2,4 g.

Der Farbstoff liefert entsprechend nach den Färbebeispielen 1B) gefärbt farbstarke Gelbtöne.

### Beispiel 22

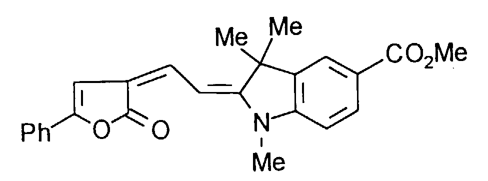

Eine Mischung aus 3,56 g 3-Benzoylpropionsäure, 6,4 g des Aldehyds aus Beispiel 2, 12,5 ml Acetanhydrid und 10,0 ml Eisessig wird 1 Stunde unter Rückfluß erhitzt. Das Produkt wird nach dem Erkalten abgesaugt und durch Umfällen aus DMF/Wasser gereinigt. Ausbeute: 2,8 g.
Nach den Färbebeispielen 1B) färbt obiger Farbstoff Kunststoffteile in intensiven orangen Tönen.

### Beispiel 23

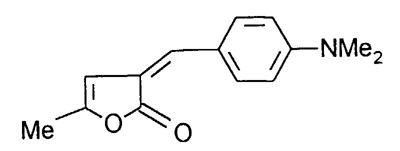

Eine Mischung aus 2,2 g α-Angelicalacton (5-Methyl-2-furanon), 3,0 g 4-Dimethylaminobenzaldehyd und 0,1 ml Piperidin wird im Verlauf von 3 Stunden auf 180 bis 185°C erhitzt und anschließend 3 Stunden bei dieser Temperatur gehalten. Während dieser Zeit destilliert man das Reaktionswasser ab. Verteilt auf 2 Portionen setzt man in Abständen insgesamt 4,4 g α-Angelicalacton und 0,5 ml Piperidin nach. Die Reaktionsmischung wird dann in Eisessig gelöst und das Produkt mit Eis/Wasser fraktioniert gefällt, wobei insgesamt 1,35 g reines Produkt erhalten werden.

Der Farbstoff liefert entsprechend der Färbebeispiele 1B) gefärbt farbstarke Gelbtöne.

### Beispiel 24

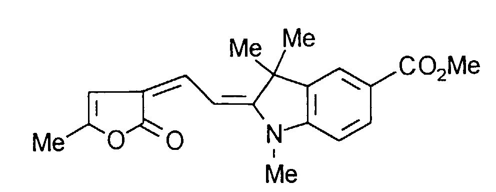

Eine Mischung aus 2,2 g α-Angelicalacton, 6,3 g des Aldehyds aus Beispiel 2, 30 ml Toluol und 0,3 ml Piperidin wird 18 Stunden am Wasserabscheider erhitzt. Anschließend wird das Lösungsmittel im Vakuum entfernt und der Rückstand anschließend aus 15 ml Eisessig umkristallisiert. Ausbeute: 1,2 g.

Nach den Färbebeispielen 1B) färbt obiger Farbstoff Kunststoffe in intensiven Gelbtönen.

### Beispiel 25

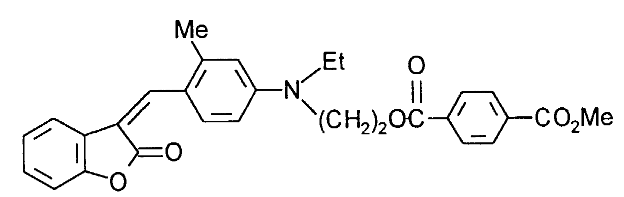

Eine Mischung aus 3,3 g des Benzofuranons aus Beispiel 1, 6,3 g eines Aldehyds der Formel 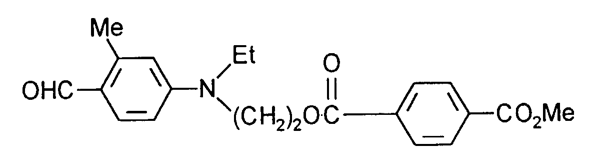 12,5 ml Essigsäureanhydrid und 10 ml Eisessig wird 3 Stunden unter Rückfluß erhitzt und anschließend im Vakuum zur Trockene eingeengt. Der Rückstand wird mehrmals mit Ligroin durchgerieben und das Ligroin wiederholt abdekantiert. Dann verrührt man den Rückstand mit einigen Portionen Diethylether, und engt die Etherphase anschließend ein. Der Niederschlag wird abgesaugt und getrocknet. Ausbeute 1,7 g.

Entsprechend der Färbebeispiele 1B) gefärbt erhält man mit obigem Farbstoff kräftige Gelbtöne.

### Beispiel 26

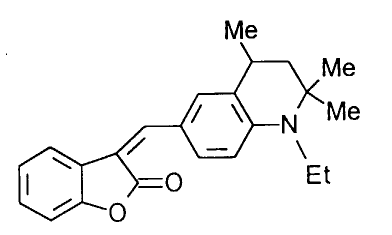

Eine Lösung von 2,7 g des Benzofurans aus Beispiel 1, 4,1 g des Aldehyds der Formel 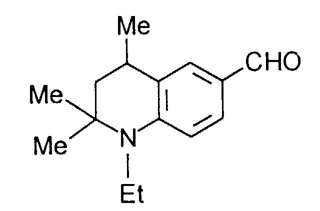 und 0,3 ml Piperidin in 30 ml Toluol wird 1 Stunde unter Rückfluß am Wasserabscheider zum Sieden erhitzt. Danach entfernt man die flüchtigen Anteile im Vakuum und verreibt den Rückstand mehrmals mit frischen Ligroin-Portionen. Anschließend nimmt man den zähen Rückstand in Diethylether auf und kühlt auf 0°C ab. Der entstandene Niederschlag wird kalt abgesaugt und getrocknet.
Ausbeute 1,6 g.

In Kunststoffen analog den Färbebeispielen 1B) gefärbt ergibt obiger Farbstoff intensive gelbe Töne.

### Beispiel 27

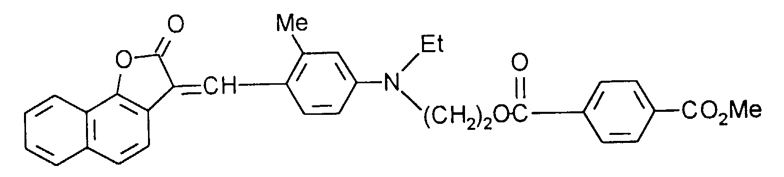

Eine Mischung aus 1,84 g des Naphthofuranons aus Beispiel 4, 3,7 g des Aldehyds aus Beispiel 25, 0,3 ml Piperidin und 30 ml Toluol wird 2 Stunden am Wasserabscheider zum Sieden erhitzt. Anschließend destilliert man 10 ml Toluol ab und läßt erkalten. Der entstandene Niederschlag wird abgesaugt und mit Diethylether gewaschen. Ausbeute 0,9 g. Weitere 2,0 g fallen aus den vereinigten Toluol- und Ether-Filtraten beim Stehen über Nacht aus.

Analog den Färbebeispielen 1B) ausgefärbt erhält man mit obigem Farbstoff kräftige rotstichige Gelbtöne.

### Beispiel 28

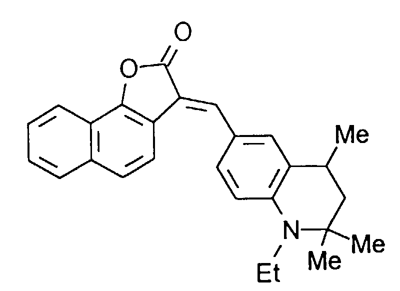

Eine Lösung von 1,84 g des Naphthofuranons aus Beispiel 4 und 2,3 g des Aldehyds aus Beispiel 26 in 12,5 ml Acetanhydrid und 10,0 ml Eisessig wird 30 Minuten unter Rückfluß erhitzt und anschließend im Vakuum zur Trockene eingeengt. Der Rückstand wird in 100 ml Eisessig gelöst. Zu dieser Lösung werden nun unter heftigem Rühren 50 ml Wasser getropft; danach rührt man noch über Nacht nach. Der Niederschlag wird abgesaugt, mit Wasser gewaschen und getrocknet. Nach dem Umkristallisieren aus 10 ml Toluol erhält man 1,9 g des obigen Produktes.

In Kunststoffen entsprechend den Färbebeispielen 1B) gefärbt ergibt dieser Farbstoff farbstarke Orangetöne.

### Beispiel 29

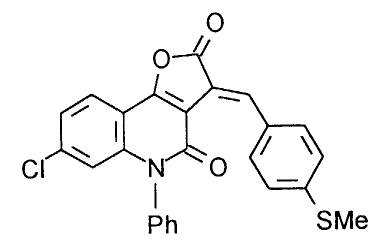

Eine Mischung aus 2,3 g des Chinolins aus Beispiel 14, 1,06 g 4-Methylthiobenzaldehyd, 0,04 g Natriumacetat, 12,5 ml Acetanhydrid und 10 ml Essigsäure wird 1 Stunde unter Rückfluß erhitzt. Das Produkt wird anschließend heiß abgesaugt, mit Essigsäure und Methanol gewaschen und getrocknet. Ausbeute: 2,3 g.

Analog zu den Färbebeispielen 1B) gefärbt ergibt obiger Farbstoff brillante farbstarke Gelbtöne in Kunststoffen.

### Beispiel 30

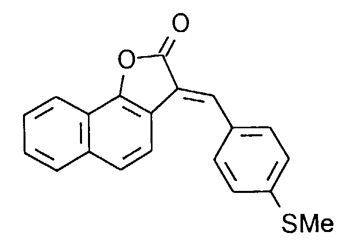

Eine Lösung von 3,6 g des Naphthofuranons aus Beispiel 4, 3,0 g 4-Methylthiobenzaldehyd und 0,08 g Natriumacetat in 12,5 ml Acetanhydrid und 10,0 ml Essigsäure wird 1 Stunde unter Rückfluß erhitzt. Nach dem Erkalten wird der Niederschlag abgesaugt und mit Methanol gewaschen. Ausbeute: 2,5 g.

Entsprechend der Färbebeispiele 1B) ausgefärbt, liefert obiger Farbstoff intensive, gelbe Kunststoffeinfärbungen.

### Beispiel 31

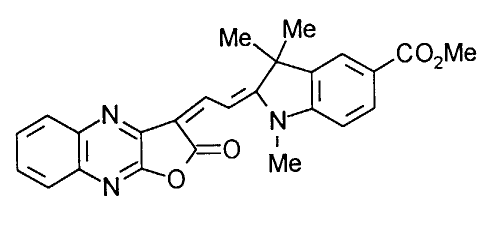

### 1. Stufe

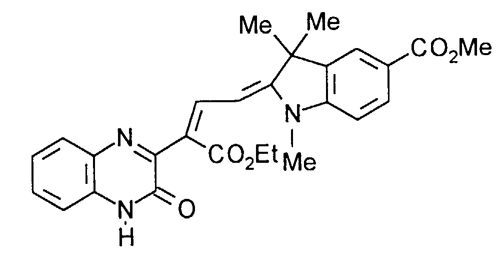

Eine Mischung aus 3,5 g des Chinoxalins der Formel 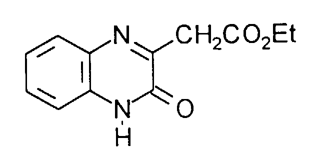 4,6 g des Aldehyds aus Beispiel 2, 12,5 ml Acetanhydrid und 10 ml Essigsäure wird 2 Stunden bei 110°C gerührt. Nach dem Erkalten wird filtriert und das Filtrat im Vakuum von Lösungsmittel befreit. Der Rückstand wird in Methanol in der Hitze gelöst. Das beim Abkühlen ausfallende Produkt wird abgesaugt, mit Methanol gewaschen und getrocknet. Ausbeute: 3,9 g.

### 2. Stufe

3,0 g des Produkte der ersten Stufe werden in 30 ml 1-Chlornaphthalin zusammen mit 0,1 g p-Toluolsulfonsäurehydrat kurz auf 240°C erhitzt. Nach dem Erkalten gibt man 50 ml Methanol zu und saugt das ausgefallene Endprodukt ab. Nach dem Waschen mit Methanol und Trocknen erhält man 1,4 g des obigen Endproduktes.

Analog zu den Färbebeispielen 1B) gefärbt erhält man mit diesem Farbstoff intensive Rottöne.

### Beispiel 32

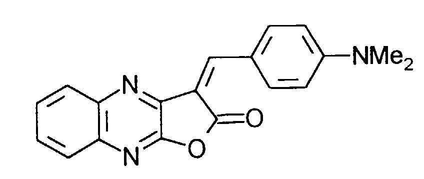

3,5 g des Chinoxalins aus Beispiel 31, 2,3 g 4-Dimethylaminobenzaldehyd, 12,5 ml Acetanhydrid und 10,0 ml Essigsäure werden 30 Minuten zum Sieden erhitzt. Anschließend entfernt man die flüchtigen Bestandteile vollständig im Vakuum und versetzt den Rückstand mit 30 ml 1-Chlornaphthalin und 0,1 g p-Toluolsulfonsäurehydrat. Die Lösung wird 45 Minuten auf 240°C erhitzt und dann nach dem Abkühlen auf 50°C mit Methanol versetzt. Der Niederschlag wird abgesaugt und mit Methanol gewaschen. Ausbeute: 0,5 g.

In Kunststoffen entsprechend der Färbebeispiele 1B) ausgefärbt ergibt obiger Farbstoff kräftige orange Färbungen.

### Beispiel 33

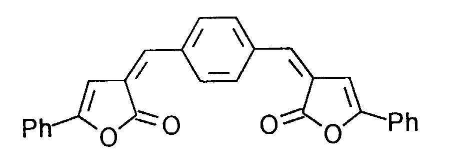

Eine Lösung von 4,5 g Benzoylpropionsäure, 1,4 g Terephthaldialdehyd und 0,04 g Natriumacetat in 12,5 ml Essigsäureanhydrid und 10 ml Essigsäure wird 20 Minuten unter Rühren zum Sieden erhitzt. Anschließend versetzt man mit weiteren 10 ml Essigsäure und saugt den Niederschlag heiß ab, welcher gründlich mit Essigsäure und Methanol gewaschen wird. Ausbeute: 3,5 g.

Kunststoffe werden durch obigen Farbstoff entsprechend der Färbebeispiele 1B) intensiv orange gefärbt.

### Beispiel 34

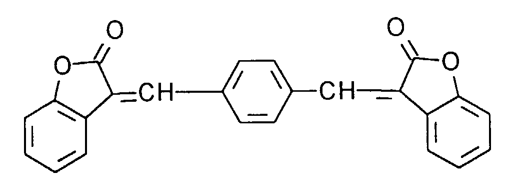

Eine Mischung aus 6,7 g des Benzofuranons aus Beispiel 1, 2,7 g Terephthaldialdehyd, 0,08 g Natriumacetat, 12,5 ml Acetanhydrid und 10 ml Essigsäure wird 1 Stunde unter Rückfluß erhitzt. Nach dem Erkalten wird der Niederschlag abgesaugt, mit Methanol gewaschen und getrocknet. Ausbeute: 5,8 g.

Intensive Gelbtöne erhält man, wenn man obigen Farbstoff analog den Färbebeispielen 1B) in Kunststoffen ausfärbt.

### Beispiel 35

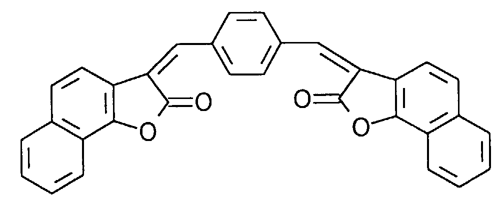

Eine Suspension aus 2,5 g Naphthofuran aus Beispiel 4, 0,73 g Terephthaldialdehyd, 0,025 g Natriumacetat, 10 ml Acetanhydrid und 8 ml Essigsäure wird 1,5 Stunden unter Rückfluß erhitzt. Der ausgefallene Niederschlag wird abgesaugt und mit Essigsäure und Methanol gewaschen. Ausbeute: 2,0 g.

Nach den Färbebeispielen 1B) gefärbt führt obiger Farbstoff zu brillanten orangen Farbtönen.

### Beispiel 36

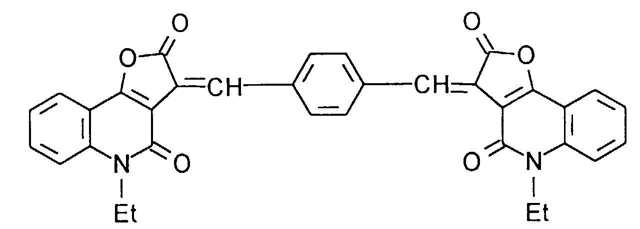

Eine Mischung aus 4,95 g des Chinolons aus Beispiel 11, 1,34 g Terephthaldialdehyd, 12,5 ml Acetanhydrid und 10 ml Essigsäure wird 2 Stunden unter Rückfluß erhitzt. Der entstandene Niederschlag wird bei 80°C abgesaugt, mit Eisessig und Methanol gewaschen und getrocknet. Ausbeute: 2,8 g.
Entsprechend der Färbebeispiele 1B) gefärbt erhält man mit obigem Farbstoff Gelbtöne.

### Beispiel 37

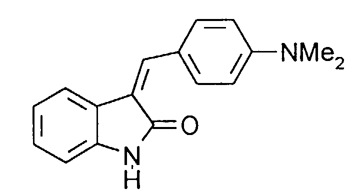

Eine Mischung aus 2,2 g 2-Indolon der Formel 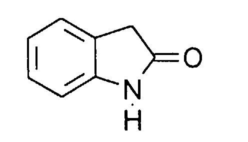 2,3 g 4-Dimethylaminobenzaldehyd, 0,3 ml Piperidin und 30 ml Toluol wird 2 Stunden am Wasserabscheider erhitzt. Anschließend kühlt man auf Raumtemperatur und saugt den Niederschlag ab. Er wird mit Toluol und Diethylether gewaschen und getrocknet. Ausbeute: 3,8 g.
Entsprechend der Färbebeispiele 1B) gefärbt, erhält man mit obigem Farbstoff Gelbtöne.

### Beispiel 38

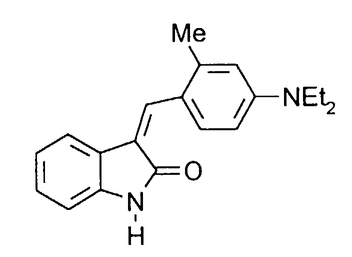

Eine Mischung aus 2,2 g 2-Indolon, 3,1 g 4-Diethylamino-2-methylbenzaldehyd, 0,3 ml Piperidin und 30 ml Toluol wird 3 Stunden unter Rückfluß am Wasserabscheider erhitzt. Nach 18 Stunden bei Raumtemperatur wird der Niederschlag abgesaugt, mit Toluol und Diethylether gewaschen und getrocknet. Ausbeute: 1,5 g.

Analog zu den Färbebeispielen 1B) gefärbt ergibt obiger Farbstoff brillante farbstarke Gelbtöne in Kunststoffen.

### Beispiel 39

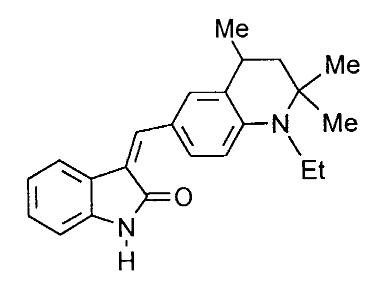

2,2 g 2-Indolon werden analog zu Beispiel 1 mit 3,5 g eines Aldehyds der Formel 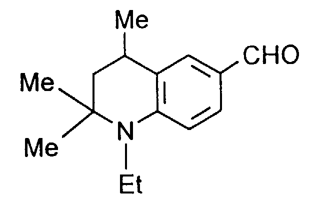 umgesetzt. Anschließend engt man im Vakuum ein und fällt das Produkt mit Diethylether. Ausbeute: 4,1 g.

Entsprechend der Färbebeispiele 1B) ausgefärbt liefert obiger Farbstoff intensive, gelbe Kunststoffeinfärbungen.

### Beispiel 40

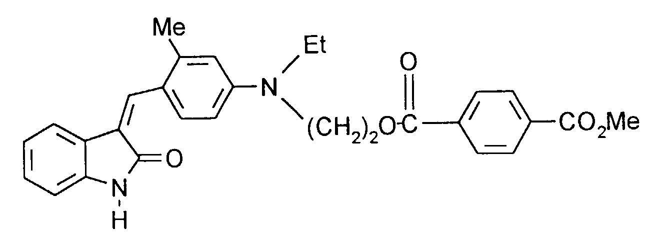

2,2 g 2-Indolon, 5,5 g des Aldehyds der Formel 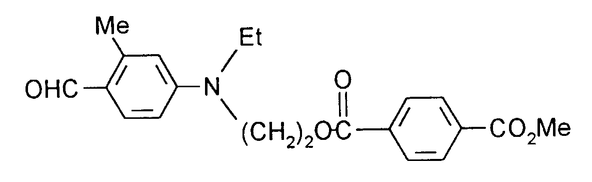 0,3 ml Piperidin und 30 ml Toluol werden 1 Stunde unter Auskreisen des Reaktionswassers erhitzt. Anschließend saugt man das Produkt ab, wäscht mit Toluol und Ether und trocknet. Nach dem Umkristallisieren aus Toluol erhält man 3,7 g.

In Kunststoffen analog den Färbebeispielen 1B) gefärbt ergibt obiger Farbstoff intensive gelbe Töne.

### Beispiel 41

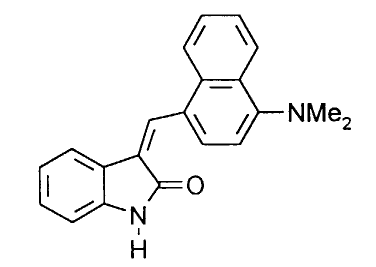

Eine Mischung aus 2,2 g 2-Indolon, 4,8 g 4-Dimethylaminonaphthalin-1-carbaldehyd, 0,3 ml Piperidin und 30 ml Toluol wird 1 Stunde am Wasserabscheider erhitzt. Danach verdünnt man mit Toluol und saugt den Niederschlag ab. Nach dem Waschen mit Toluol und Diethylether erhält man 4,1 g des Farbstoffes obiger Formel.

Analog den Färbebeispielen 1B) ausgefärbt erhält man mit obigem Farbstoff kräftige Gelbtöne.

### Beispiel 42

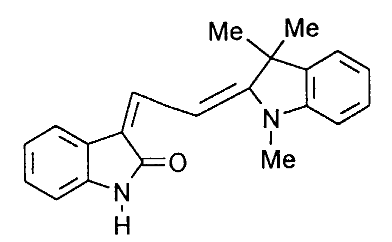

3,0 g Aldehyd der Formel 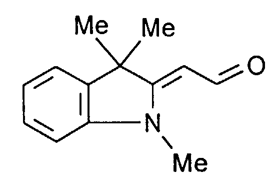 und 2,2 g 2-Indolon setzt man in 30 ml Toluol bei Gegenwart von 0,3 ml Piperidin in üblicher Weise um. Nach dem Filtrieren und Toluol- und Diethylether-Wäsche fallen 4,6 g des obigen Produktes an.

Analog den Färbebeispielen aus Beispiel 1 erhält man farbstarke rotstichige Gelbtöne mit guten Echtheiten.

### Beispiel 43

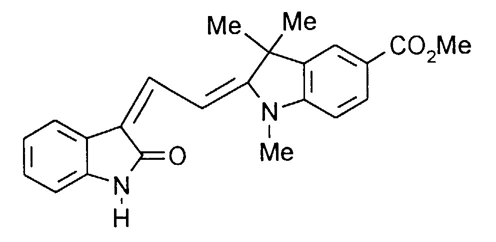

Eine Mischung aus 2,2 g Indolon, 4,6 g des Aldehyds der Formel 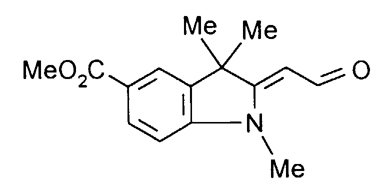 0,3 ml Piperidin und 30 ml Toluol wird 30 Minuten am Wasserabscheider erhitzt. Der entstandene Niederschlag wird bei 100°C abgesaugt und in üblicher Weise gewaschen. Ausbeute: 4,4 g.

Färbt man den obigen Farbstoff analog den Färbebeispielen aus Beispiel 1, so erhält man echte, farbstarke Gelbtöne.

### Beispiel 44

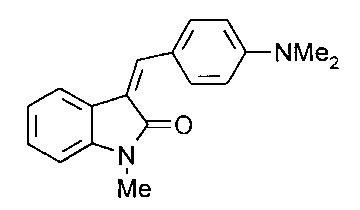

Eine Mischung aus 2,2 g 1-Methyl-2-indolon der Formel 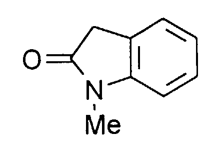 2,3 g 4-Dimethylaminobenzaldehyd, 0,3 ml Piperidin und 30 ml Toluol wird 4 Stunden am Wasserabscheider erhitzt. Danach entfernt man das Lösungsmittel im Vakuum und löst den Rückstand in heißem Methanol; beim Erkalten fällt das Produkt aus, wird abgesaugt und mit Methanol gewaschen. Ausbeute: 2,3 g

Analog den Färbebeispielen aus Beispiel 1 gefärbt, liefert der obige Farbstoff farbstarke gelbe Färbungen.

### Beispiel 45

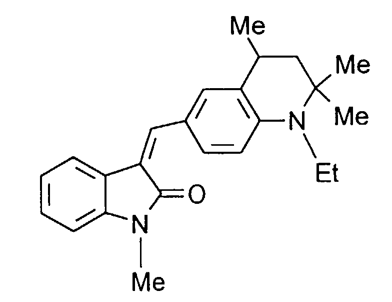

Eine Lösung von 2,4 g 1-Methyl-2-indolon, 3,8 g des Aldehyds aus Beispiel 39 und 0,3 ml Piperidin in 30 ml Toluol wird 6 Stunden am Wasserabscheider erhitzt. Anschließend wird das Lösungsmittel im Vakuum entfernt und der Rückstand mit Methanol zum Sieden erhitzt. Beim Erkalten fällt das Produkt als Öl aus. Nach dem Dekantieren wird es getrocknet und danach mit Ligroin extrahiert. Beim Erkalten fällt der Farbstoff kristallin aus und wird abgesaugt. Ausbeute: 0,7 g.

Der Farbstoff liefert entsprechend der Färbebeispiele 1B) gefärbt farbstarke Gelbtöne.

### Beispiel 46

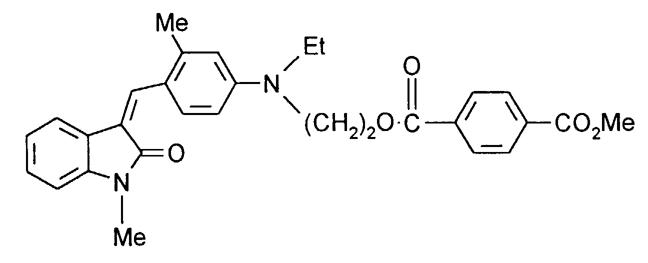

Analog zu Beispiel 45 werden 2,4 g 1-Methyl-2-indolon mit 5,5 g des Aldehyds aus Beispiel 40 umgesetzt und aufgearbeitet. Ausbeute: 1,6 g.

Nach den Färbebeispielen 1B) färbt obiger Farbstoff Kunststoffe in intensiven Gelbtönen.

### Beispiel 47

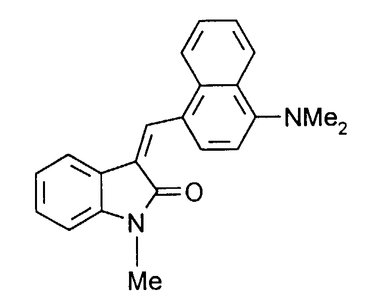

Eine Mischung aus 2,4 g 1-Methyl-2-indolon, 4,8 g 4-Dimethylamino-naphthalin-1-carbaldehyd, 0,3 ml Piperidin und 30 ml Toluol wird 2,5 Stunden am Wasserabscheider zum Sieden erhitzt. Nach dem Erkalten wird der Niederschlag abgesaugt und mit Toluol und Methanol gewaschen. Ausbeute: 2,9 g.

Entsprechend der Färbebeispiele 1B) gefärbt erhält man mit obigem Farbstoff kräftige Gelbtöne.

### Beispiel 48

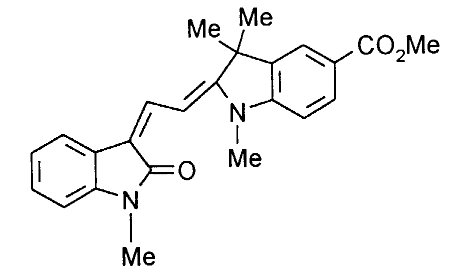

Eine Suspension aus 2,4 g 1-Methyl-2-indolon, 4,2 g des Aldehyds aus Beispiel 43, 0,3 ml Piperidin und 30 ml Toluol wird 2 Stunden am Wasserabscheider erhitzt. Danach wird heiß filtriert und mit 10 ml siedendem Toluol nachgewaschen. Beim Erkalten fällt der Farbstoff aus dem Filtrat aus. Nach dem Absaugen und Diethyletherwäsche fallen 3,9 g des obigen Produkten an.

In Kunststoffen entsprechend den Färbebeispielen 1B) gefärbt ergibt dieser Farbstoff farbstarke rotstichige Gelbtöne.

### Beispiel 49

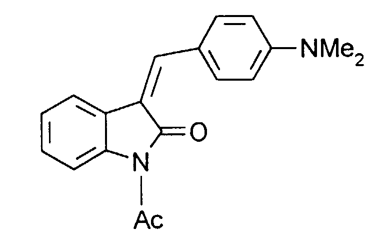

Eine Lösung von 2,0 g 2-Indolon, 2,3 g 4-Dimethylaminobenzaldehyd, 12,5 ml Acetanhydrid und 10,0 ml Essigsäure wird 4 Stunden unter Rückfluß erhitzt und anschließend unter vermindertem Druck vom Lösungsmittel befreit. Der Rückstand wird in 50 ml Methanol 15 Minuten unter Rückfluß erhitzt. Der entstandene Niederschlag wird bei 60°C abgesaugt und mit Methanol gewaschen. Ausbeute: 3,2 g.

Analog den Färbebeispielen aus Beispiel 1 gefärbt, erhält man intensive, gelbe Färbungen.

### Beispiel 50

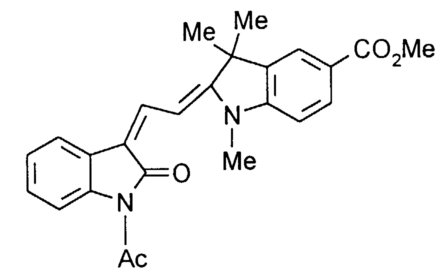

Analog zu Beispiel 13 werden 2,2 g 2-Indolon mit dem Aldehyd aus Beispiel 43 umgesetzt. Nach 20 Minuten wird abgekühlt, das Produkt abgesaugt und mit Acetanhydrid und Methanol gewaschen. Ausbeute: 2,9 g.

In Kunststoffen liefert der Farbstoff analog den Färbebeispielen aus Beispiel 1 intensive gelbe Färbungen.

## Patentansprüche

1. Verfahren zum Massefärben von Kunststoffen mit Farbstoffen der Formel (I) 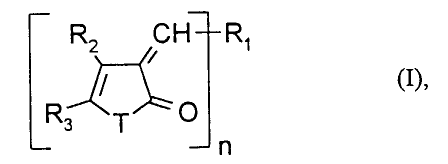 worin
T für 0 oder N-R₀ steht, worin
R₀ H, Alkyl, Aryl, Acyl bedeutet oder mit R₃ oder R₂ zusammen einen 5- bis 7-gliedrigen Ring bildet,
n 1 oder 2 bedeutet,
R₁ für n = 1, Aryl, Hetaryl oder Heterocyclylidenmethyl und
für n = 2, eine direkte Bindung oder Arylen bedeutet,
R₂, R₃ unabhängig voneinander für H, Alkyl, Aryl, Aryl- oder Alkylsulfonyl, Cyano, einen Rest der Formel -COR stehen, worin R für Alkoxy, Amino, Alkylamino, Dialkylamino, Arylamino, Alkyl oder Aryl steht oder gemeinsam den Rest eines gegebenenfalls substituierten aromatischen, heteroaromatischen oder heteroaliphatischen Ringes bilden.

2. Verfahren gemäß Anspruch 1, dadurch gekennzeichnet, daß man Farbstoffe der Formel (II) 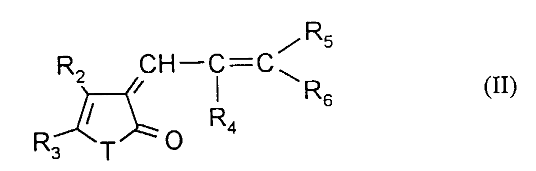 einsetzt, worin
R₄ und R₆ zusammen den Rest eines gegebenenfalls substituierten aromatischen oder heteroaromatischen Restes bilden und
R₅ für H, Alkyl, Halogen, OH, Alkoxy, Aryloxy, Alkylthio, Arylthio, Acyloxy, Dialkylamino oder Acylamino steht, oder
R₅ und R₆ zusammen den Rest eines gegebenenfalls substituierten heterocyclischen Rings bilden und
R₄ für H oder Alkyl steht.

3. Verfahren gemäß Anspruch 1, dadurch gekennzeichnet, daß man Farbstoffe der Formel (III) 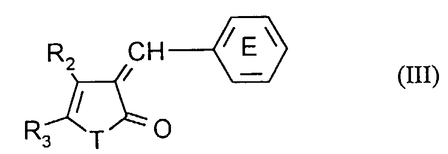 einsetzt, worin
der Ring E gegebenenfalls mit Alkyl, Halogen, OH, Alkoxy, Aryloxy, Acyloxy, Alkylthio, Arylthio, Dialkylamino oder Acylamino substituiert ist.

4. Verfahren gemäß Anspruch 2, worin
R₅ und R₆ zusammen den Rest eines gegebenenfalls ein- oder zweifach benzanellierten und/oder weitersubstituierten Pyrrols, Thiazols, Oxazols, Imidazols, Pyridins, Pyrans oder Pyrimidins bilden.

5. Verfahren gemäß Anspruch 2, dadurch gekennzeichnet, daß Farbstoffe der Formel (IV) eingesetzt werden, 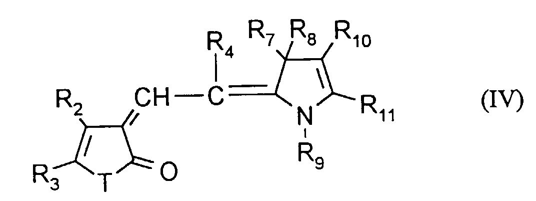 wonn
R₇, R₈ unabhängig voneinander für C₁-C₄-Alkyl stehen oder gemeinsam den Rest eines gegebenenfalls substituierten carbocyclischen 5- oder 6-Rings bilden,
R₉ eine gegebenenfalls durch Phenyl, Cl, OH, CN, Alkoxycarbonyl, Alkoxy, Dialkylamino oder Acyloxy substituierte C₁-C₄-Alkylgruppe bedeutet und
R₁₀, R₁₁ gemeinsam den Rest eines gegebenenfalls substituierten Benzol- oder Naphthalinringes bilden.

6. Verfahren gemäß Anspruch 1, dadurch gekennzeichnet, daß Farbstoffe der Formel (I) eingesetzt werden, worin
R₂ für Wasserstoff steht und
R₃ für C₁-C₄-Alkyl oder gegebenenfalls durch C₁-C₄-Alkoxy, Cl, Br oder C₁-C₄-Alkyl substituiertes Phenyl oder Naphthyl steht, oder
R₂ und R₃ gemeinsam einen Rest der Formel 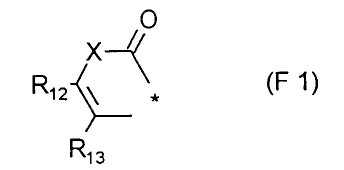 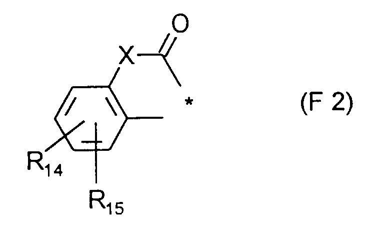 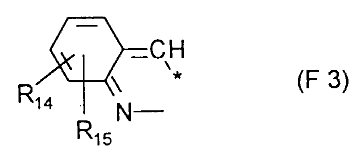 oder 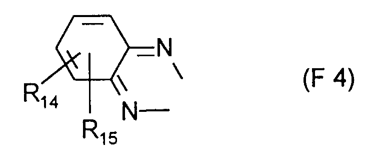
bilden,
wobei die mit * markierte Bindung die R₂-Verknüpfung kennzeichnet und worin
X für O oder N-R₁₆ steht, wobei R₁₆ = H, C₁-C₆-Alkyl oder Phenyl bedeutet,
R₁₂ für H, Phenyl oder C₁-C₄-Alkyl steht,
R₁₃ für H, Phenyl, C₁-C₄-Alkyl, C₁-C₄-Alkoxycarbonyl, Aminocarbonyl, Mono- oder di-alkylaminocarbonyl, Arylaminocarbonyl, C₁-C₄-Alkylcarbonyl, Benzyl oder Cl steht,
R₁₄ und R₁₅ unabhängig voneinander für H, Cl, C₁-C₄-Alkyl C₁-C₄-Alkoxy oder C₁-C₄-Alkoxycarbonyl stehen oder gemeinsam den Rest eines gegebenenfalls mit diesen Substituenten substituierten Benzoringes bilden oder
R₂ und R₃ den Rest eines gegebenenfalls substituierten Benzo- oder Naphthoringes bilden.

7. Verfahren gemäß Anspruch 1, dadurch gekennzeichnet, daß T = O bedeutet.

8. Verfahren gemäß Anspruch 1, dadurch gekennzeichnet, daß der Kunststoff ein Thermoplast ist, insbesondere ein Vinylpolymer, Polyester oder Polyamid.

## Claims

1. Process for bulk dyeing of plastics with dyestuffs of the formula (I) 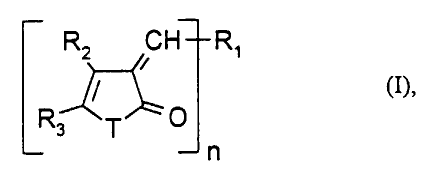 wherein
T represents O or N-R₀, wherein
R₀ denotes H, alkyl, aryl or acyl or, together with R₃ or R₂, forms a 5- to 7-membered ring,
n denotes 1 or 2,
R₁ if n = 1, denotes aryl, hetaryl or hetero-cyclylidenemethyl and
if n = 2, denotes a direct bond or arylene and
R₂ and R₃ independently of one another represent H, alkyl, aryl, aryl- or alkylsulphonyl, cyano or a radical of the formula -COR, wherein R represents alkoxy, amino, alkylamino, dialkylamino, arylamino, alkyl or aryl, or together form the radical of an optionally substituted aromatic, heteroaromatic or heteroaliphatic ring.

2. Process according to Claim 1, characterized in that dyestuffs of the formula (II) 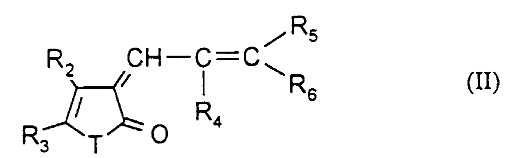 wherein
R₄ and R₆ together form the radical of an optionally substituted aromatic or heteroaromatic radical and
R₅ represents H, alkyl, halogen, OH, alkoxy, aryloxy, alkylthio, arylthio, acyloxy, dialkylamino or acylamino, or
R₅ and R₆ together form the radical of an optionally substituted heterocyclic ring and
R₄ represents H or alkyl,
are employed.

3. Process according to Claim 1, characterized in that dyestuffs of the formula (III) 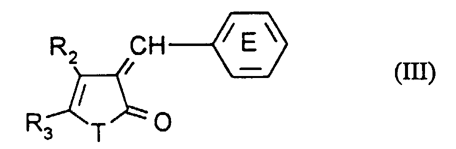 wherein
the ring E is optionally substituted by alkyl, halogen, OH, alkoxy, aryloxy, acyloxy, alkylthio, arylthio, dialkylamino or acylamino,
are employed.

4. Process according to Claim 2, wherein
R₅ and R₆ together form the radical of an optionally mono- or di-benzo-fused and/or further substituted pyrrole, thiazole, oxazole, imidazole, pyridine, pyran or pyrimidine.

5. Process according to Claim 2, characterized in that dyestuffs of the formula (IV) 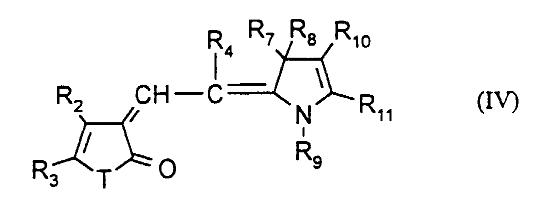 wherein
R₇ and R₈ independently of one another represent C₁-C₄-alkyl, or together form the radical of an optionally substituted carbocyclic 5- or 6-membered ring,
R₉ denotes a C₁-C₄-alkyl group which is optionally substituted by phenyl, Cl, OH, CN, alkoxycarbonyl, alkoxy, dialkylamino or acyloxy and
R₁₀ and R₁₁ together form the radical of an optionally substituted benzene or naphthalene ring,
are employed.

6. Process according to Claim 1, characterized in that dyestuffs of the formula (I) wherein
R₂ represents hydrogen and
R₃ represents C₁-C₄-alkyl, or phenyl or naphthyl which is optionally substituted by C₁-C₄-alkoxy, Cl, Br or C₁-C₄-alkyl, or
R₂ and R₃ together form a radical of the formula 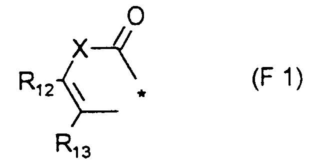 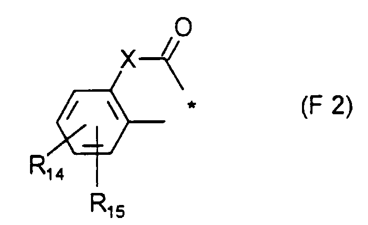 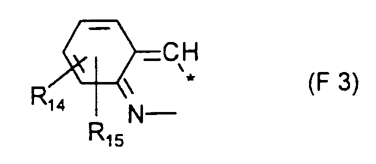 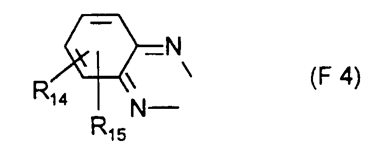
wherein the bond labelled with * identifies the R₂ linkage, and wherein
X represents O or N-R₁₆, wherein R₁₆ denotes H, C₁-C₆-alkyl or phenyl,
R₁₂ represents H, phenyl or C₁-C₄-alkyl,
R₁₃ represents H, phenyl, C₁-C₄-alkyl, C₁-C₄-alkoxycarbonyl, aminocarbonyl, mono- or dialkylaminocarbonyl, arylaminocarbonyl, C₁-C₄-alkylcarbonyl, benzyl or Cl,
R₁₄ and R₁₅ independently of one another represent H, Cl, C₁-C₄-alkyl, C₁-C₄-alkoxy or C₁-C₄-alkoxycarbonyl, or together form the radical of a benzo ring optionally substituted by these substituents, or
R₂ and R₃ form the radical of an optionally substituted benzo or naphtho ring
are employed.

7. Process according to Claim 1, characterized in that T denotes O.

8. Process according to Claim 1, characterized in that the plastic is a thermoplastic, in particular a vinyl polymer, polyester or polyamide.

## Revendications

1. Procédé pour colorer des résines synthétiques dans la masse à l'aide de colorants de formule (I) 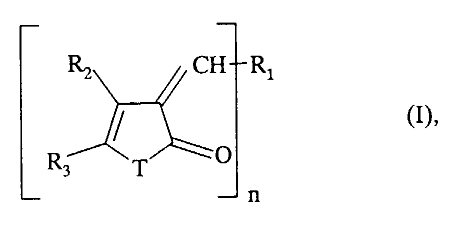 dans laquelle
T représente O ou N-R₀,
R₀ représentant H, un groupe alkyle, aryle, acyle, ou bien formant avec R₃ ou R₂ un cycle de 5 à 7 chaînons,
n est égal à 1 ou 2,
R₁ représente un groupe aryle, hétéroaryle ou hétérocyclylidèneméthyle lorsque n = 1 et
une liaison directe ou un groupe arylène lorsque n = 2,
R₂ et R₃ représentent chacun, indépendamment l'un de l'autre, H, un groupe alkyle, aryle, aryl- ou alkyl-sulfonyle, cyano, un groupe de formule -COR dans laquelle R représente un groupe alcoxy, amino, alkylamino, dialkylamino, arylamino, alkyle ou aryle, ou bien R₂ et R₃ complètent ensemble un cycle aromatique, hétéroaromatique ou hétéroaliphatique éventuellement substitué.

2. Procédé selon la revendication 1, caractérisé en ce que l'on utilise des colorants de formule (II) 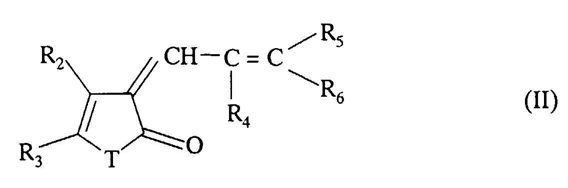 dans laquelle
R₄ et R₆ complètent ensemble un radical aromatique ou hétéroaromatique éventuellement substitué et
R₅ représente H, un groupe alkyle, un halogène, un groupe OH, alcoxy, aryloxy, alkylthio, arylthio, acyloxy, dialkylamino ou acylamino, ou bien
R₅ et R₆ complètent ensemble un hétérocycle éventuellement substitué et
R₄ représente H ou un groupe alkyle

3. Procédé selon la revendication 1 caractérisé en ce que l'on utilise des colorants de formule (III) 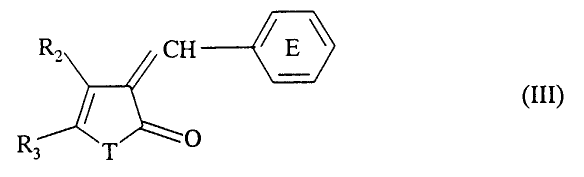 dans laquelle
le cycle E est éventuellement substitué par des groupes alkyle, des halogènes, des groupes OH, alcoxy, aryloxy, acyloxy, alkylthio, arylthio, dialkylamino ou acylamino.

4. Procédé selon la revendication 2, dans lequel
R₅ et R₆ complètent ensemble un cycle pyrrole, thiazole, oxazole, imidazole, pyridine, pyranne ou pyrimidine éventuellement condensé avec un ou deux noyaux benzéniques et/ou portant lui-même d'autres substituants.

5. Procédé selon la revendication 2 caractérisé en ce que l'on utilise des colorants de formule (IV) 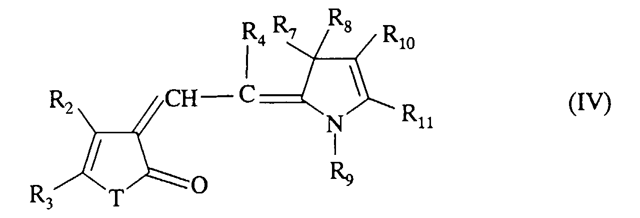 dans laquelle
R₇ et R₈ représentent chacun, indépendamment l'un de l'autre, un groupe alkyle en C₁-C₄ ou complètent ensemble un noyau carbocyclique à 5 ou 6 chaînons éventuellement substitué,
R₉ représente un groupe alkyle en C₁-C₄ éventuellement substitué par des groupes phényle, des atomes de chlore, des groupes OH, CN, alcoxycarbonyle, alcoxy, dialkylamino ou acyloxy et
R₁₀ et R₁₁ complètent ensemble un cycle benzénique ou naphtalénique éventuellement substitué.

6. Procédé selon la revendication 1 caractérisé en ce que l'on utilise des colorants de formule (I) dans laquelle
R₂ représente l'hydrogène,
R₃ représente un groupe alkyle en C₁-C₄ ou un groupe phényle ou naphtyle éventuellement substitué par des groupes alcoxy en C₁-C₄, le chlore, le brome ou des groupes alkyle en C₁-C₄, ou bien
R₂ et R₃ forment ensemble un groupe de formule 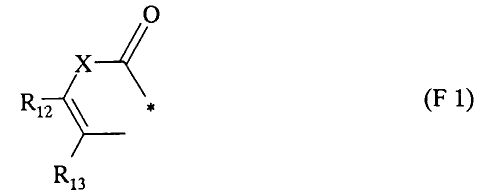 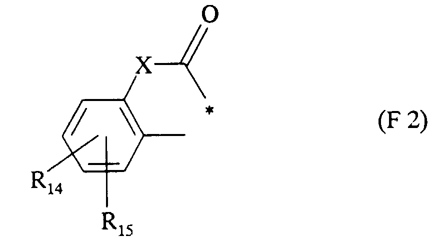 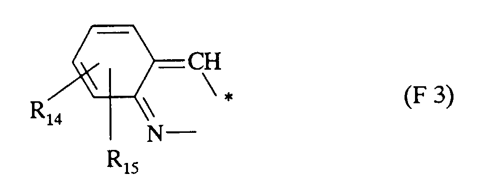 ou 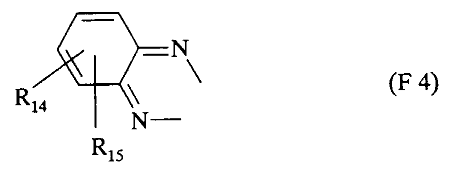
la liaison signalée par * caractérisant la liaison avec R₂, et les symboles ayant les significations suivantes :
X représente O ou un groupe N-R₁₆ dans lequel R₁₆ représente H, un groupe alkyle en C₁-C₆ ou phényle,
R₁₂ représente H, un groupe phényle ou alkyle en C₁-C₄,
R₁₃ représente H, un groupe phényle, alkyle en C₁-C₄, (alcoxy en C₁-C₄)carbonyle, aminocarbonyle, mono-ou di-alkylaminocarbonyle, arylaminocarbonyle, (alkyle en C₁-C₄)carbonyle, benzyle, ou Cl,
R₁₄ et R₁₅ représentent chacun, indépendamment l'un de l'autre, H, Cl, un groupe alkyle en C₁-C₄, alcoxy en C₁-C₄ ou (alcoxy en C₁-C₄)carbonyle ou bien complètent ensemble un cycle benzénique portant le cas échéant ces substituants, ou bien
R₂ et R₃ complètent ensemble un cycle benzo ou naphto éventuellement substitué.

7. Procédé selon la revendication 1 caractérisé en ce que T = O

8. Procédé selon la revendication 1 caractérisé en ce que la résine synthétique est une résine thermoplastique, en particulier un polymère vinylique, un polyester ou un polyamide.
